# EUROPÄISCHE PATENTSCHRIFT

(11) **EP 1 725 833 B1**
(45) Veröffentlichungstag und Bekanntmachung des Hinweises auf die Patenterteilung: **01.08.2018**
(21) Anmeldenummer: 05716972.4
(22) Anmeldetag: 09.03.2005
(51) Int. Cl.: G01B 11/24, G01B 5/00, G01B 21/04

(54) **VERFAHREN UND ABTASTANORDNUNG ZUM BERÜHRUNGSLOSEN ABTASTEN DREIDIMENSIONALER OBJEKTE**
METHOD AND SCANNING ARRANGEMENT FOR THE CONTACTLESS SCANNING OF THREE-DIMENSIONAL OBJECTS
PROCEDE ET DISPOSITIF POUR BALAYER SANS CONTACT DES OBJETS TRIDIMENSIONNELS

(30) Priorität: 10.03.2004 EP 04005732
(43) Veröffentlichungstag der Anmeldung: 29.11.2006
(73) Patentinhaber: DST Swiss AG, 8193 Eglisau (CH)
(72) Erfinder: DIEFENBACHER, Rolf, CH-8193 Eglisau (CH); STOOPS, Dean, Corona, CA 92881 (US)
(74) Vertreter: Hepp Wenger Ryffel AG
(86) Internationale Anmeldenummer: PCT/EP2005/051057
(87) Internationale Veröffentlichungsnummer: WO 2005/088242

(56) Entgegenhaltungen:
- EP-A- 0 671 679
- EP-A- 1 225 421
- DE-A1- 3 315 576
- DE-A1- 3 910 855
- DE-A1- 4 208 455
- DE-A1- 10 105 774
- DE-A1- 19 927 872
- DE-C1- 19 710 273

## Beschreibung

Die Erfindung betrifft ein Verfahren und eine Abtastanordnung zum berührungslosen Abtasten von dreidimensionalen Objekten mittels Laserlichts und eine Haltevorrichtung für Objekte gemäss den unabhängigen Patentansprüchen.

Um dreidimensionale Objekte in digitaler Form darstellen zu können, werden Verfahren verwendet, die auf dem Abtasten der Objekte mit einem Lichtstrahl beruhen. Ein Beispiel findet sich in EP 671 679. Es wird ein Verfahren vorgestellt, bei dem das zu vermessende Objekt auf einem Drehteller um die vertikale Achse gedreht wird und dabei auf einer ringähnlichen Umfangslinie abgetastet wird. Nach jeder Umdrehung des Objekts wird der Abtastkopf in der Höhe bewegt, danach wird das Objekt auf einem nächsten Ring abgetastet. Zur Messung der Position eines Messpunktes wird eine optische Triangulation mit Hilfe von zwei Empfängerkameras durchgeführt.

Ein Problem beim Abtasten ergibt sich bei kompliziert geformten Objekten, die Hinterschneidungen aufweisen. Bei einer festen Einstellung des Lichtstrahls können diese üblicherweise nicht oder nur sehr unzureichend erfasst werden. In EP 671 679 ist der Abtastkopf deshalb einerseits in der horizontalen Ebene schwenkbar, so dass der Winkel, mit dem das Licht auf das Objekt trifft, in der horizontalen Ebene variiert werden kann. Andererseits kann der Abtastkopf auch in der vertikalen Ausrichtung gekippt werden, so dass der Winkel, unter dem das Licht auf das Objekt trifft, auch in vertikaler Richtung verändert werden kann.

Trotz dieser Lösungsansätze können Hinterschneidungen zum Teil nicht erfasst werden. Ein weiteres Problem ist die Genauigkeit der Messung. Für eine zuverlässige Digitalisierung sollten die Messpunkte auf dem Objekt weniger als 0,4 mm, vorzugsweise weniger als 0,2 mm voneinander entfernt sein. Durch das ringweise Abtasten mittels Lichtstrahl und sequentiellem Messen diskreter Lichtwerte entsteht ein Gittermuster von Messwerten, die aus den durch den Lichtstrahl definierten Linien auf dem Objekt verlaufen. Insbesondere bei unregelmässigen Oberflächen ist es schwierig, die erforderliche Dichte von Messpunkten zu erreichen. Um z.B. den Linienabstand zu halbieren, müsste der Höhenvorschub des Abtastkopfes ebenfalls halbiert werden. Dies führt zu aufwendiger Verstellmechanik, höherem Einfluss von mechanischen Toleranzen des Vorschubs und verlängerter Abtastzeit.

Das Dokument DE 39 10 855 A1 offenbart ein Verfahren zur berührungsfreien Vermessung der Aussenkonturen von dreidimensionalen Objekten mit einer mittels elektromagnetischer Wellen arbeitender Entfernungs-Messeinheit, die den Abstand eines Objektes in Y-Richtung entlang des Messstrahls misst und in Z-Richtung bewegt wird. Bei diesem Verfahren wird das zu vermessende Objekt um eine Rotationsachse parallel zur Z-Richtung, die vom Messstrahl gekreuzt werden kann, rotiert und/oder die Masseinheit in X-Richtung bewegt, wobei bei jeder Einzelmessung die Drehlage des Objektes und die X- sowie Y-Lage der Masseinheit bekannt ist, so dass die Relativlage des am Objekt vermessenen Punktes zu einem Referenzpunkt nach geometrischen Grundsätzen errechenbar ist.

Im Dokument DE 42 08 455 A1 ist sind eine Verfahren und ein Anordnung zur berührungslosen dreidimensionalen Messung offenbart. Diese dienen der Bestimmung der Geometrie komplizierter Messobjekte nach dem Prinzip der optischen Triangulation, im Besonderen dem Laserlichtschnittverfahren. Bei dem Verfahren werden zwei Dimensionen optoelektronisch aufgenommen und die dritte durch Relativbewegung des Messgutes realisiert. Hinterschneidungen bzw. verdeckte Kanten können durch mehrere Messebenen, die anhand von Informationen über das Messgut festgelegt sind, vollständig erfasst werden. Die Anzahl und Lage der notwendigen Messebenen werden während der Messung durch Auswertung geeigneter Kriterien automatisch korrigiert und unter Berücksichtigung der tatsächlichen Lage der Messebenen zu einem einheitlichen Datensatz zusammengefasst. Die Anordnung besteht aus drei oder mehreren Verstelleinheiten, um eine freie Positionierbarkeit des Messgutes zum Messkopf zu gewährleisten. Das beschriebene Verfahren und die vorgestellte Anordnung sind besonders zur Vermessung von Gebissmodellen geeignet.

Es ist die Aufgabe der vorliegenden Erfindung, die Nachteile des Bekannten zu überwinden, insbesondere Verfahren und Abtastanordnungen zum berührungslosen Abtasten dreidimensionaler Objekte zu schaffen, mittels welcher die Messgenauigkeit erhöht werden kann und Hinterschneidungen bei komplizierten Objekten zuverlässiger erfasst werden können. Weitere Aufgaben der Erfindung sind vor allem, die Abtastverfahren zu beschleunigen, zu vereinfachen und auch eine einfache und kostengünstige Konstruktion der Abtastänordnung zu ermöglichen.

Diese Aufgaben werden mit einem Verfahren gemäss Anspruch 1 und einer Abtastanordnung gemäss Anspruch 14 gelöst. Beim Verfahren zum berührungslosen Abtasten von dreidimensionalen Objekten werden die Objekte mit einem gebündelten Lichtstrahl, vorzugsweise einem Laserstrahl abgetastet. Die Frequenz des Lichtstrahls kann sich sowohl im sichtbaren als auch im von Auge nicht wahrnehmbaren Bereich befinden.

Beim vorliegenden Verfahren wird das Objekt in mindestens zwei unterschiedlichen Messabschnitten abgetastet. Ein Messabschnitt bezeichnet den Abtastvorgang eines vorbestimmten Bereichs des Objekts. Dieser Bereich wird an Messpunkten abgetastet, die auf einer oder mehreren Linien im Bereich liegen können. Ein Messabschnitt ist ein Abtastvorgang, bei dem während des Abtastens die Art, wie der Lichtstrahl auf das Objekt trifft, nicht verändert wird. Soll das Objekt z.B. bei einem Messabschnitt rotieren, so rotiert es während des gesamten Messabschnitts, und der Winkel des Lichteinfalls auf das Objekt wird nicht verändert.

Es ist möglich, dass der gleiche Bereich während mehrerer Messabschnitte abgetastet wird, indem nach einem Messabschnitt die Einstellungen für Lichtstrahl und Objekt für den nächsten Messabschnitt geändert werden. Zum Beispiel kann der gleiche Bereich abgetastet werden, indem einmal das Objekt rotiert und einmal der Lichtstrahl über das Objekt bewegt wird.

Messpunkte sind jene Punkte auf der Oberfläche des Objekts, auf denen der abtastende Lichtstrahl auftrifft und das reflektierte Licht durch einen Lichtsensor bzw. eine Abtastvorrichtung gemessen wird. Durch die Messung wird die Position des Messpunktes bestimmt und zur digitalen Darstellung des Objekts berechnet und gespeichert. Die Entfernung eines Messpunktes von der Abtastanordnung lässt sich z.B. durch Auswertung mehrerer Messpunkte trigonometrisch berechnen. Bei handelsüblichen Empfängern, insbesondere CCD-Zeilen wird der Abstand eines Messpunktes unmittelbar ermittelt und ausgegeben.

Die Grösse eines Messpunktes hängt unter anderem von der Belichtungsdauer des Punktes ab, also der Zeitdauer, während welcher der reflektierte Lichtstrahl aufgenommen wird. Wenn mit einem kontinuierlichen Lichtstrahl abgetastet wird, so werden die Messpunkte z.B. mit einem Trigger in zeitlich konstanten Abständen erzeugt oder durch sequentielle, diskrete Messwerte eines Sensors dargestellt.

Im Zusammenhang mit der vorliegenden Erfindung sind wenigstens zwei unterschiedliche Messabschnitte vorgesehen, die zu unterschiedlichen Gruppen oder "Wolken" von Messpunkten führen, welche das Objekt repräsentieren und seine Abbildung ermöglichen. Das Objekt oder Teile des Objekts werden also wenigstens zweimal separat dargestellt. Die Messergebnisse der zwei oder mehr Messabschnitte werden anschliessend zusammengelegt.

Bei zwei unterschiedlichen Messabschnitten können die Linien der Messpunkte, die auf der Oberfläche des Objekts entstehen, nicht parallel sein. Alternativ oder zusätzlich kann das Objekt bei einem Messabschnitt rotieren und bei dem anderen nicht. Der Vorteil dieses Verfahrens liegt vor allem darin, dass sich die durch unterschiedliche Messabschnitte erzeugten Objektdarstellungen wechselseitig ergänzen. Wenn die Messpunkte der beiden Messabschnitte auf nicht parallelen Linien verlaufen, ergibt der zweite Messabschnitt Zwischen-Messpunkte auf Linien, die unter einem Winkel zu den Linien des ersten Messabschnitts verlaufen. Mathematisch bedeutet dies, dass dem ersten "Gitter" von Messpunkten ein zweites, dazu im Winkel stehendes Gitter überlagert wird.

Eine Abbildung des stationären, also nicht rotierenden Objekts ergibt andere Messpunkte als die Abtastung eines rotierenden Objekts, bei dem die Abtastung in der Regel entlang einer spiralförmig über das Objekt laufenden Linie erzeugt wird. Dies kommt daher, dass der Lichtstrahl unter unterschiedlichen Winkeln zur Oberfläche auf das Objekt fällt, je nachdem, ob es rotiert oder nicht. Dadurch werden Zwischenpunkte erreicht und damit die Messlinien ergänzt.

Das Verfahren kann auch nur für Teilbereiche des Objekts angewendet werden. Dies ist z.B. dann von Vorteil, wenn bekannt ist, welche Partien des Objektes z.B. durch Hinterschneidungen oder andere Oberflächen-Unregelmässigkeiten schwierig zu erfassen sind. In einem solchen Fall kann dann z.B. das Objekt im ersten Messabschnitt in seiner Gesamtheit und beim zweiten Messabschnitt nur beschränkt auf einen Objektabschnitt erfasst werden.

Wie bereits angeführt, liegt einer der wesentlichen Vorteile dieses Verfahrens darin, dass durch unterschiedliche Messabschnitte unterschiedliche Messpunkte auf der Oberfläche des Objekts dargestellt werden. Damit steigt die Auflösung der Darstellung des Objekts und die Messdauer wird verkürzt. Die Reihenfolge der Messabschnitte kann dabei gewählt werden. Wesentlich ist beim vorliegenden Verfahren, dass wenigstens zwei unterschiedliche Messabschnitte durchgeführt werden, deren das Objekt oder Teile des Objekts repräsentierende Messwerte zusammengelegt werden.

Die Messwerte der unterschiedlichen Messabschnitte werden anschliessend zu einer digitalen Darstellung des Objekts zusammengelegt, womit gemeint ist, dass die Messwerte der Messabschnitte in ein gemeinsames virtuelles Gitter eingetragen werden. Wenn viele Messwerte annähernd den gleichen Punkt beschreiben, so kann die Dichte der Messwerte im Gitter z.B. reduziert werden, indem die Positionen mehrerer benachbarter Punkte gemittelt werden. Eine andere Variante ist durch die Filterung der Messpunkte gegeben, wie weiter unten beschrieben ist.

Bisher hat es sich als vorteilhaft erwiesen, wenn eine vorbestimmte Anzahl Messabschnitte durchgeführt wird, bevor die erhaltenen Daten ausgewertet werden. Weiteres Abtasten des Objekts nach dieser Anzahl von Messabschnitten sollte nur noch in Ausnahmefällen notwendig sein. Die Anzahl und Art der Messabschnitte kann durch Erfahrungswerte optimiert werden, falls immer gleichartige Objekte (z.B. immer Ohr- oder Zahnabdrücke) abgetastet werden.

Es ist aber durchaus möglich, nach einer Basis von wenigstens zwei Messabschnitten die Messdaten auszuwerten und das Objekt gezielt in Bereichen mit fehlenden oder ungenügenden Messpunkten durch angepasste Messabschnitte weiter abzutasten. Bei einer guten Rechnerleistung kann sich dieses Vorgehen als sehr effizient erweisen. Erfindungsgemäss wird der Lichtstrahl über eine Spiegelanordnung auf das Objekt gelenkt. Je nach Bauart der Anordnung ist es möglich, den Strahl z.B. durch verschiedene Spiegel oder einen oder mehrere schwenkbare Spiegel in verschiedenen Wegen und/oder unter verschiedenen Winkeln über das Objekt zu lenken. Zwei unterschiedliche Messabschnitte können z.B. erreicht werden, indem der Lichtstahl über die Spiegelanordnung so über das Objekt gelenkt wird, dass die Messlinien nicht parallel sind. Der gleiche Effekt kann aber auch erzielt werden, wenn der Lichtsender und/oder der Lichtsensor (z.B. eine Kamera) relativ zum Objekt verstellbar angeordnet ist.

Es ist vorteilhaft, wenn das Objekt für einen neuen Messabschnitt gegenüber der Position eines früheren Messabschnitts gekippt wird. Das Objekt wird dann als gekippt betrachtet, wenn es um einen vorbestimmten Winkel von bevorzugt weniger als 90°, vorzugsweise etwa 10° bis 45° um eine Achse gedreht wird, die nicht ungefähr senkrecht zu den Messlinien des ersten Messabschnitts steht. Durch das Kippen entstehen bei einem folgenden Messabschnitt nicht parallele Messlinien auf dem Objekt, auch wenn die Führung des Lichtstrahls nicht verändert wird.

Es ist möglich, dass das Objekt bei mindestens einem Messabschnitt um eine Drehachse rotiert. Dabei werden der einfallende Lichtstrahl und das Objekt so relativ zueinander bewegt, dass die Messpunkte entlang einer Linie auf der Oberfläche des Objekts liegen. Es ist dabei nicht von Bedeutung, ob der Lichtstrahl direkt von der Lichtquelle auf das Objekt gelangt, oder ob er über eine Spiegelanordnung darauf gelenkt wird. Vor allem lässt sich einfacher Aufbau der Auslenkanordnung verbunden mit grosser Messgenauigkeit erreichen, wenn der Lichtstrahl über wenigstens einen Spiegel auf das Objekt gelenkt wird. Dies vermeidet auch mechanische Belastung der Lichtquelle.

Wenn der Lichtstrahl und das rotierende Objekt in Richtung der Drehachse gegeneinander bewegt werden, entsteht eine spiralförmige Linie von Messpunkten auf der Oberfläche des Objekts.

Eine andere Möglichkeit, einen Messabschnitt durchzuführen, ist, den Lichtstrahl in ungefähr parallelen Linien über das nicht rotierende Objekt zu bewegen. Erfindungsgemäss wird dies erreicht, indem der Lichtstrahl über eine rotierende Spiegelanordnung auf das Objekt gelenkt wird. Alternativ, aber nicht erfindungsgemäss, kann das auch erreicht werden, indem der Lichtsender beweglich angeordnet ist.

Wenn ein beweglicher Lichtsender verwendet wird, ist es günstiger, das Licht in Zickzack-Linien über das ruhende Objekt zu lenken. Dann können sowohl auf dem Hin- als auch auf dem Rückweg des Lichtsenders Daten aufgenommen werden. Damit die gesamte dem Sender zugewandte Seite abgetastet wird, befinden sich die Umkehrpunkte der Zickzack-Linie vorzugsweise ausserhalb des Objekts. Bei guter Vorkenntnis der Objektgrösse ist es aber auch möglich, die Umkehrpunkte auf dem Objekt abzubilden und in den Messabschnitt einzubeziehen. Um den Lichtstrahl über eine Spiegelanordnung in Zickzack-Linien über das Objekt zu lenken, kann beispielsweise ein oszillierender Spiegel verwendet werden.

Die Messgenauigkeit kann weiter erhöht werden, wenn der Lichtstrahl unter unterschiedlichen Winkeln zur Oberfläche auf das Objekt gelenkt wird. Dies kann sowohl bei gleichartigen als auch bei unterschiedlichen Messabschnitten gemacht werden. Erfindungsgemäss wird das Licht über eine Spiegelanordnung auf das Objekt gelenkt und umfasst die Spiegelanordnung mehrere Spiegel, welche um eine gemeinsame Drehachse gedreht werden, wobei die Spiegel in unterschiedlichen Winkeln zur Drehachse befestigt sind. Ebenso, aber nicht erfindungsgemäss, ist es möglich, den Lichtsender schwenkbar zu befestigen, so dass der Lichtstrahl unter verschiedenen Winkeln auf das Objekt gelenkt wird.

Zur Referenzierung bei herkömmlichen Abtastverfahren wird von Zeit zu Zeit ein Eichobjekt auf dem Objekthalter angebracht; die beim Abtasten ermittelten Messwerte dieses Objekts werden zur Eichung des Geräts verwendet. Bei der Erfindung kann das Eichen des Gerätes entfallen. Stattdessen wird bei vorbestimmten Messabschnitten mindestens ein Referenzobjekt ausserhalb des Objektes zusätzlich zum Objekt mitabgetastet. Ein Referenzobjekt zeichnet sich dadurch aus, dass es eindeutig ist, und dass seine Position im Bezug zum Objekt bekannt oder berechenbar ist. Die Referenzierung kann zum Beispiel immer beim ersten Messabschnitt eines neuen Objekts gemacht werden. Das Abtasten der Referenzobjekte kann vor oder nach dem Abtasten des Objekts vorgenommen werden. Falls bekannt ist, wann die Referenzierung stattfindet, ist es auch möglich, dass die Referenzobjekte während eines Messabschnitts abgetastet werden.

Vorteilhaft ist es, wenn bei jedem Messabschnitt mindestens ein Referenzobjekt mitabgetastet wird. Dann steht jeder Messwert im Bezug zu einem oder mehreren Referenzwerten, wodurch sich die Genauigkeit der Bestimmung der durch die Messwerte repräsentierten Objektpunkte erhöht.

Die Anzahl der Referenzobjekte muss so gewählt sein, dass es bei bekannter Geometrie der Messanordnung und bei bekanntem Messvorgehen möglich ist, jedem Messpunkt eine Position im dreidimensionalen Raum zuzuordnen. Für eine zuverlässige Referenzierung ist es vorteilhaft, wenn sich in jeder Position bzw. bei jedem Messabschnitt Referenzobjekte im Blickfeld des Lichtstrahls befinden.

Es ist vorteilhaft, wenn ein Teil einer Haltevorrichtung für das Objekt zur Referenzierung verwendet wird, weil sich diese immer in der gleichen Position relativ zum Objekt befindet. Dazu können Teile der Haltevorrichtung eindeutig markiert werden, z.B. mittels vorstehenden oder rückspringenden Formen wie Kugelabschnitten, Ringen oder Kegelabschnitten. Es ist auch möglich, dass eine Fase, also eine Abschrägung an der Haltevorrichtung als Referenzobjekt dient.

Diese Art der Referenzierung hat sich als äusserst genau erwiesen. Sie kann vorteilhaft bei Verfahren eingesetzt werden, bei denen Objekte oder Objektpunkte in einem Raum bestimmt oder gemessen werden sollen. Hauptvorteile dieser Methode sind abgesehen von der Genauigkeit der Messung auch die Einfachheit bei der Handhabung und die Geschwindigkeit, mit welcher das Objekt abgetastet werden kann. Wenn im Verlauf eines Messabschnitts wenigstens einmal ein Referenzobjekt abgetastet wird, können alle anderen Messwerte in sicheren Bezug zu den Referenzwerten gesetzt werden. Fehler in der Bewegung der Abtastmechanik, z.B. wenn die Haltevorrichtung beim Rotieren nicht rund läuft, können ausserdem erfasst und bei der Berechnung berücksichtigt werden.

Um Messwerte entsprechend ihrer Genauigkeit bearbeiten zu können, kann ein Hilfssignal erzeugt werden, welches Information über die Oberflächenbeschaffenheit des Objekts am Ort des auftreffenden Lichtstrahls und/oder über die Eigenschaften des auf dem Objekt auftreffenden Lichtstrahls enthält. Dies kann beispielsweise die Farbe und/oder die Reflektivität des Objektes betreffen oder die Form und/oder Grösse der beleuchteten Stelle auf dem Objekt. Das Hilfssignal kann mehrere dieser oder ähnlicher Informationen enthalten. Solche Hilfssignale lassen sich z.B. auf einfache Weise durch eine CCD-Kamera, vorteilhaft eine farbempfindliche CCD-Kamera ermitteln. Vorzugsweise wird jedem Messwert die zugehörige Information aus dem Hilfssignal zugeordnet.

Das Hilfssignal kann mit einem vorzugsweise farbempfindlichen Lichtempfänger, insbesondere einer Kamera erzeugt werden. Besonders bevorzugt sind zur Zeit der Anmeldung CCD-Kameras, weil diese viel Information erzeugen und weiterleiten können.

Messwerte können mit Hilfe der Information des Hilfssignals bearbeitet werden. Beispielsweise werden Messwerte verworfen, bei denen die Grösse und/oder Form des Lichtpunktes auf der Oberfläche des Objektes nicht einer vorbestimmten Norm genügen. Wenn z.B. ein Lichtstrahl das Objekt nur seitlich streift oder unter schrägem Einfallswinkel auftrifft, sind die Messwerte ungenau oder nicht verwertbar. Dies lässt sich z.B. aus der Form des reflektierten Bilds oder der Intensität des reflektierten Lichts schliessen. Da schwache reflektierte Signale auch z.B. durch einen Farbwechsel der Oberfläche des Objekts verursacht werden können, ist es vorteilhaft, wenn gleichzeitig Farbwerte als Hilfssignal berücksichtigt werden. Alternativ oder ergänzend können Messwerte auch aufgrund der Intensität des Messsignals verworfen werden. Ziel ist, die wegen zu schwaches Signals oder zu flachen Reflexionswinkels unsicheren Messwerte herauszufiltern und in der endgültigen Darstellung des Objektes nicht zu berücksichtigen.

Es ist vorteilhaft, die Belichtungszeit aufgrund der Oberflächeninformation zu verändern. Eine dunkle oder schlecht reflektierende Stelle des Objekts könnte länger belichtet werden als eine helle. Um die Messgenauigkeit beizubehalten, sollte die Geschwindigkeit, mit welcher der Lichtstrahl über das Objekt bewegt wird, der Belichtungszeit angepasst werden. Bei längerer Belichtungszeit muss das Objekt entsprechend langsamer bewegt werden.

Es ist auch möglich, die Lichtstärke des einfallenden Lichtstrahls aufgrund der Oberflächeninformation zu verändern. Zum Beispiel könnte die Lichtstärke erhöht werden, wenn der Lichtstrahl auf eine dunkle oder schlecht reflektierende Stelle des Objekts trifft.

Mit diesen Verfahren können zum Beispiel Schwankungen der Signalstärke des empfangenen Messsignals aufgrund von unterschiedlichen Reflektionswerten an der Oberfläche kompensiert werden. Unterschiedliche Reflexionswerte entstehen beispielsweise bei unterschiedlichen Farben, oder bei matten oder glänzenden Stellen auf dem Objekt. Fehler können durch die Korrektur der Messwerte in Abhängigkeit der Oberflächeneigenschaften reduziert werden.

Besonders vorteilhaft ist das Verfahren, wenn das Objekt mindestens einmal rotierend und mindestens einmal nicht rotierend abgetastet wird und ausserdem bei einem Messabschnitt gegenüber der Position eines früheren Messabschnitts gekippt wird. Erfindungsgemäss wird der Lichtstrahl über eine drehbare Spiegelanordnung auf das Objekt gelenkt und ist es vorteilhaft, dass bei jedem Messabschnitt ein Teil der Haltevorrichtung zur Referenzierung mitabgetastet wird. Dadurch erhöhen sich die Messgenauigkeit und die Wahrscheinlichkeit, dass Hinterschneidungen erfasst werden können.

Die Abtastanordnung zum berührungslosen Abtasten von dreidimensionalen Objekten umfasst einen Sender zum Aussenden von gebündelten Lichtstrahlen, insbesondere Laserstrahlen, und einen Empfänger zum Erfassen von Lichtsignalen. Weiter weist sie eine Haltevorrichtung zur Aufnahme des Objektes auf und ist mit einer Steuerungs- und Rechnungsanordnung verbunden oder verbindbar. Diese Steuerungs- und Rechnungsanordnung kann ein gewöhnlicher PC sein, es kann aber auch eine in der Anordnung eingebaute Rechnereinheit sein.

Es ist eine Auslenkanordnung zum Auslenken des Lichtstrahls über die Oberfläche des Objekts vorgesehen. Mit dieser Auslenkanordnung ist es möglich, das Objekt in mindestens zwei unterschiedlichen Messabschnitten abzutasten. Die Auslenkanordnung umfasst in bekannter Weise eine optische Anordnung zum Lenken eines Lichtstrahls auf das Objekt. Beispielsweise kann die Auslenkanordnung einen Bewegungsmechanismus für den Lichtsender oder für die Haltevorrichtung umfassen. Erfindungsgemäss ist eine drehbare Spiegelanordnung zur Lenkung des Lichtstrahls und zur Veränderung des Winkels relativ zu Objekt vorgesehen. Vorzugsweise ist die Haltevorrichtung für das Objekt um eine Drehachse drehbar. Damit kann das Objekt rotierend abgetastet werden.

In der Auslenkanordnung kann auch eine Anordnung zum Kippen des Objekts für einen Messabschnitt gegenüber der Position des Objekts bei einem früheren Messabschnitt vorgesehen sein. Dadurch wird auf einfache Weise erreicht, dass das Objekt durch zwei unterschiedliche Messabschnitte abgetastet werden kann. Diese Anordnung kann in der Haltevorrichtung für das Objekt eingebaut sein, so dass diese oder Teile davon mit dem Objekt mitgekippt werden.

Die Auslenkanordnung zum Auslenken des Lichtstrahls ist von Vorteil so gestaltet, dass die Haltevorrichtung und der einfallende Lichtstrahl derart gegeneinander bewegt werden können, dass das gesamte Objekt abgetastet werden kann. Dies ist möglich, indem die Haltevorrichtung bewegt wird und/oder indem der einfallende Lichtstrahl bewegt wird. Der einfallende Lichtstrahl kann vorteilhaft bewegt werden, indem der Sender beweglich angeordnet ist. Erfindungsgemäss wird der Lichtstrahl über eine drehbare Spiegelanordnung auf das Objekt gelenkt. Es ist nicht notwendig, dass bei jedem Messabschnitt das gesamte Objekt abgetastet wird, bei einem Messabschnitt kann auch nur ein bestimmter Bereich des Objekts abgetastet werden.

Besonders schnelle Abtastung ist möglich, wenn die Auslenkanordnung zum Lenken des Lichtstrahls in etwa parallelen Linien über das nicht rotierende Objekt vorgesehen ist. Dies wird erfindungsgemäss erreicht, indem der Lichtstrahl über einen beweglichen Spiegel auf das Objekt gelenkt wird; alternativ, aber nicht erfindungsgemäss, kann auch der Lichtsender beweglich angeordnet sein. Es ist auch denkbar, dass das Objekt bewegt wird.

Minimierung der Spiegelanordnung lässt sich z.B. erreichen, wenn der Lichtstrahl in zickzackförmigen Linien über das Objekt bewegt wird, wobei die Umkehrpunkte der Zickzack-Linie nicht auf dem Objekt liegen müssen. Dies ist auch dann vorteilhaft, wenn der Lichtsender auf einer Schiene hin- und herbewegt wird, weil dann auf dem Hin- wie auf dem Rückweg des Senders gemessen werden kann. Wenn der Lichtstrahl über einen oszillierenden Spiegel auf das Objekt gelenkt wird, entstehen auch Zickzacklinien auf dem Objekt. Wird der Lichtstrahl jedoch über einen rotierenden Spiegel auf das Objekt geleitet, so sind etwa parallele Linien vorteilhafter, was schnelle Abtastung gewährleistet.

Vorteilhaft ist ausserdem eine Auslenkanordnung, die erlaubt, dass der Lichtstrahl unter unterschiedlichen Winkeln zur Oberfläche des Objekts auf das Objekt gelenkt wird. Damit kann die Messgenauigkeit erhöht werden. Vor allem lassen sich auch Hinterschneidungen des Objekts sicherer abbilden. Die Messlinien der Messabschnitte unter unterschiedlichen Winkeln können in etwa parallelen und in nicht parallelen Linien verlaufen. Die Linien können auch Kurven-Verlauf aufweisen. Dies ist vor allem dann der Fall, wenn Objekte gekippt werden und rotieren, d.h. relativ zum Lichtstrahl "taumeln". Messabschnitte unter unterschiedlichen Winkeln sind auch vorteilhaft, wenn das Objekt mehrmals hintereinander abgetastet wird, während es rotiert. In diesem Fall sind die Linien der einzelnen Messabschnitte etwa parallel.

Die Auslenkanordnung umfasst eine Spiegelanordnung zum Umlenken des Lichtstrahls auf das Objekt. Erfindungsgemäss umfasst die Auslenkanordnung mehrere Spiegel, die um eine gemeinsame Drehachse drehbar angeordnet sind. Bei der Rotation gelangen sequentiell die verschiedenen Spiegel, erfindungsgemäss mit unterschiedlichem Winkel in die Strahlenbahn der Lichtquelle. Eine solche Spiegelanordnung in einer Abtastanordnung wie oben beschrieben kann zum Abtasten in parallelen oder nichtparallelen und bei rotierenden und stillstehenden Objekten vorteilhaft eingesetzt werden oder generell für Abtast-Vorgänge mit Lichtstrahlen verwendet werden.

Vorteilhaft sind die Spiegel fest an der Spiegelanordnung befestigt, zumindest einige davon in unterschiedlichen Winkeln zur Drehachse. Je nach Wahl des Spiegels wird der Lichtstrahl unter einem anderen Winkel zur Oberfläche des Objekts auf das Objekt gelenkt. Besonders geeignet sind Spiegelneigungen von 120° bis 150° zur Drehachse, die Anordnung als Ganzes hat die Form eines polygonalen Pyramidenstumpfs. Durch Drehen lässt sich jeweils der gewünschte Spiegel in seine Wirkposition bringen. Dabei kann der Spiegel bzw. die Drehachse sogar oszillierend verschwenkt werden, so dass der einzelne Spiegel linienförmig und in Zickzack-Form abtastet.

Wenn die gesamte Spiegelanordnung gedreht wird, wird der Lichtstrahl in Linien hintereinander mit unterschiedlichen oder gleichen Winkeln zur Oberfläche des Objektes über das Objekt gelenkt. Wenn zugleich die Spiegelanordnung und die Haltevorrichtung für das Objekt relativ zueinander bewegt werden, entstehen parallele Messlinien auf der Oberfläche des Objekts. Der grosse Vorteil dieser Spiegelanordnung ist, dass mit einem Messdurchgang, d.h. einmaligem Verschieben von Spiegelanordnung und Haltevorrichtung gegeneinander, mehrere Messabschnitte gemacht werden können, bei denen der Lichtstrahl unter unterschiedlichen Winkeln auf das Objekt gelenkt wird. Dadurch kann die gesamte Messdauer deutlich reduziert werden.

Besonders schnell kann ein Messdurchgang mit einer solchen Anordnung stattfinden, wenn die Spiegel der Spiegelanordnung in wenigstes zwei identische Gruppen unterteilt sind, wobei innerhalb jeder Gruppe alle Spiegel unter unterschiedlichen Winkeln zur Drehachse befestigt sind und die Gruppen aufeinander folgend um die Drehachse angeordnet sind. Dies hat zur Folge, dass bei einer Umdrehung der Spiegelanordnung n-mal die gleiche Spiegelneigung in die Bahn des Lichtstrahls gelangt und das Objekt dadurch n-mal unter gleichem Winkel abgetastet wird, und zwar immer nach 360°/n der Drehung der Spiegelanordnung. n ist dabei die Anzahl Gruppen. Dadurch lässt sich die Abtastgeschwindigkeit um den Faktor n pro Umdrehung des Spiegelhalters steigern. Die Anzahl n der identischen Gruppen sollte gegenüber der Grösse der Anordnung und der Anzahl verschiedener Spiegelneigungen optimiert werden. Bisher hat sich eine Anzahl n von 2 bis 3 als günstig erwiesen.

In einer weiteren Ausführungsform umfasst die Abtastanordnung eine Anordnung zum Erzeugen eines Hilfssignals, in welchem Information über Oberflächeneigenschaften des Objekts und/oder über die Eigenschaften des abtastenden Lichtstrahls auf dem Objekt in der Umgebung des Auftreffpunktes des Lichtstrahls auf dem Objekt enthalten ist. Diese Anordnung umfasst einen vorzugsweise farbempfindlichen Lichtempfänger, insbesondere eine Kamera. Besonders bevorzugt ist eine CCD-Kamera, da diese viel Information erzeugen und weiterleiten kann.

Die als Hilfssignal ausgewertete Information kann sich auf die Farbe und/oder Reflektivität, insbesondere den Grad der Mattheit der Oberfläche, beziehen, insbesondere in der Umgebung des auftreffenden Lichtstrahls. Die Information kann zusätzlich oder alternativ Auskunft über die Grösse und Form des die Oberfläche beleuchtenden Lichtstrahls beim Auftreffen auf die Oberfläche enthalten. Dies kann zum Beispiel mit einer oder mehreren Blenden erreicht werden.

Es ist möglich, dass das Messsignal und das Hilfssignal im gleichen Empfänger erfassbar sind. Dadurch können die Kosten der Anordnung reduziert werden.

Das Erzeugen und Anwenden eines solchen Hilfssignals lässt sich besonders vorteilhaft bei der erfindungsgemässen Abtastanordnung einsetzen, ist aber auch bei anderen Verfahren oder Scanner-Anordnungen zur Objektabtastung einsetzbar.

Es ist möglich, dass zur Referenzierung ein Referenzgegenstand auf dem Objekthalter platziert und abgetastet wird. Die Abtastanordnung kann dabei auf die bekannten Dimensionen des Referenzgegenstandes geeicht werden. Vorteilhaft ist jedoch, wenn die Abtastanordnung selbst mindestens ein Referenzobjekt aufweist. Wie zuvor beschrieben, ist ein Referenzobjekt eindeutig und seine Position im Bezug zum Objekt ist bekannt oder berechenbar. Bei vorbestimmten Messabschnitten muss mindestens ein Referenzobjekt abtastbar sein.

Besonders vorteilhaft befindet sich mindestens ein Referenzobjekt auf der Haltevorrichtung. Dieser bewegt sich mit dem Objekt mit, was die Analyse der Position eines Messpunktes vereinfacht. Ausserdem können Fehler in der Bewegung berücksichtigt werden, z.B. wenn die Haltevorrichtung bei der Rotation nicht rund läuft.

Als Referenzobjekte können Teile der Haltevorrichtung eindeutig markiert werden, z.B. mittels vorstehenden oder eingedellten Formen wie Kugelabschnitten, Ringen oder Kegelstücken. Auch eine konische Fläche auf der Haltevorrichtung, z.B. eine Fase an einer Kante der Haltevorrichtung, kann als Referenzobjekt dienen. Es ist aber auch möglich, dass mindestens ein, vorzugsweise mehrere, zumindest teilweise kugelförmige Körper auf der Haltevorrichtung oder in der Abtastanordnung Referenzobjekte darstellen. Zur Referenzierung kann der Kugelmittelpunkt gewählt werden, der durch das Mitabtasten der Kugeloberfläche sehr genau berechnet werden kann.

Diese Art der Referenzierung ist nicht nur in einer Anordnung gemäss der vorliegenden Erfindung vorteilhaft, sondern kann für alle möglichen Bauarten von Abtastgeräten eingesetzt werden. Die Genauigkeit der Messung ist erhöht, wenn die Referenzierung nicht über eine Eichung stattfindet, sondern über in der Abtastanordnung enthaltene Referenzobjekte, wobei die realen Messwerte eines Objektes im Verlauf des Messabschnitts mit den Messwerten der Referenzobjekte in Bezug gesetzt werden können.

Es ist vorteilhaft, wenn die Haltevorrichtung für das Objekt um eine Drehachse drehbar ist und eine Halteanordnung für das Objekt aufweist. Diese Halteanordnung besteht vorzugsweise aus einem Haltetisch und einer Achse, andere Anordnungen sind aber ebenfalls denkbar.

Weiter umfasst die Haltevorrichtung eine Kipp-Vorrichtung zum Kippen der Halteanordnung gegenüber der Drehachse um einen vorbestimmbaren Winkel. Diese Kipp-Vorrichtung weist eine Umschaltanordnung auf, mit der die Halteanordnung zwischen verschiedenen Positionen verlagert wird. Die Umschaltanordnung umfasst ein Betätigungselement, das durch das Drehen der Haltevorrichtung betätigt wird. Dieses Betätigungselement ist vorzugsweise ein Hebel, der über die Halteanordnung hinausragt und mit einem beweglichen Anschlag in Eingriff bringbar ist, um durch einfaches Drehen der Haltevorrichtung die Kippbewegung auszulösen.

Besonders vorteilhaft ist die Haltevorrichtung in verschiedene Richtungen relativ zur Abtastanordnung kippbar. Dadurch ist es möglich, Hinterschneidungen mit unterschiedlichen Blickwinkeln abzutasten, wodurch die Wahrscheinlichkeit erhöht wird, die gesamte Oberfläche des Objekts zu erfassen.

Die Halteanordnung kann eine gerade Achse aufweisen, die in einer Aufnahmeanordnung allseitig schwenkbar gelagert ist. Diese Aufnahmeanordnung besteht vorteilhaft aus einer Kugel und einem Gegenlager, in welchem die Kugel gelagert ist. Die Kugel kann z.B. durch eine Feder im Gegenlager gehalten werden. Diese Form der Aufnahmeanordnung hat den Vorteil, dass das Objekt beim Kippen nicht zugleich abgesenkt wird.

Diese Art der Haltevorrichtung kann besonders vorteilhaft in einer Abtastanordnung gemäss der vorliegenden Erfindung eingesetzt werden.

Das Verfahren und die Abtastanordnung gemäss der vorliegenden Erfindung können in einer Vielzahl von Anwendungsbereichen zum Einsatz gelangen. Zum Beispiel können Abdrücke von Zähnen oder Gehörgängen digital dargestellt werden, womit die Herstellung von Zahnprothesen oder Hörgeräten vereinfacht und beschleunigt werden kann. Das Verfahren und die Anordnung sind aber auch geeignet, um digitale Darstellungen von Bauteilen aus der Mechanik zu erhalten, insbesondere von Präzisionsteilen und Teilen, die in kleiner Stückzahl hergestellt werden. Die Liste der Anwendungsbereiche könnte beliebig verlängert werden. Das Verfahren und die Anordnung kommen also überall zum Einsatz, wo digitale Abbildungen von dreidimensionalen Objekten erstellt werden sollen.

Im Folgenden wird die Erfindung an verschiedenen Ausführungsbeispielen mit Figuren erläutert. Es zeigt
- Fig. la:: eine schematische Ansicht der gesamten Abtastanordnung,
- Fig. 1b:: eine schematische Draufsicht der Abtastanordnung gemäss Fig. la,
- Fig. 2:: eine alternative Abtastanordnung in einer schematischen Ansicht,
- Fig. 3a:: eine perspektivische Ansicht einer Spiegelanordnung,
- Fig. 3b:: eine schematische Draufsicht auf die Spiegelanordnung gemäss Fig. 3a,
- Fig. 3c:: eine schematische Seitenansicht eines Objekts und der Laserlichtstrahlen, die über unterschiedliche Spiegel der Anordnung gemäss Fig. 3a unter unterschiedlichen Winkeln auf das Objekt treffen,
- Fig. 4a bis 4e:: eine Ausführungsform einer Haltevorrichtung in verschiedenen Stellungen,
- Fig. 5a bis 5c:: eine alternative Ausführungsform einer Haltevorrichtung in verschiedenen Stellungen,
- Fig. 6:: eine schematische Draufsicht auf ein Objekt und Laserlichtstrahlen während des Abtastens des rotierenden Objekts,
- Fig. 7:: eine schematische Draufsicht auf ein Objekt und Laserlichtstrahlen während des linienförmigen Abtastens,
- Fig. 8a bis 8d:: eine schematische Seitenansicht eines Objekts mit nicht parallelen Messlinien,
- Fig. 9a bis 9d:: verschiedene Arten von Referenzobjekten, und
- Fig. 10:: ein Flussdiagramm zum Bearbeiten von Messwerten.

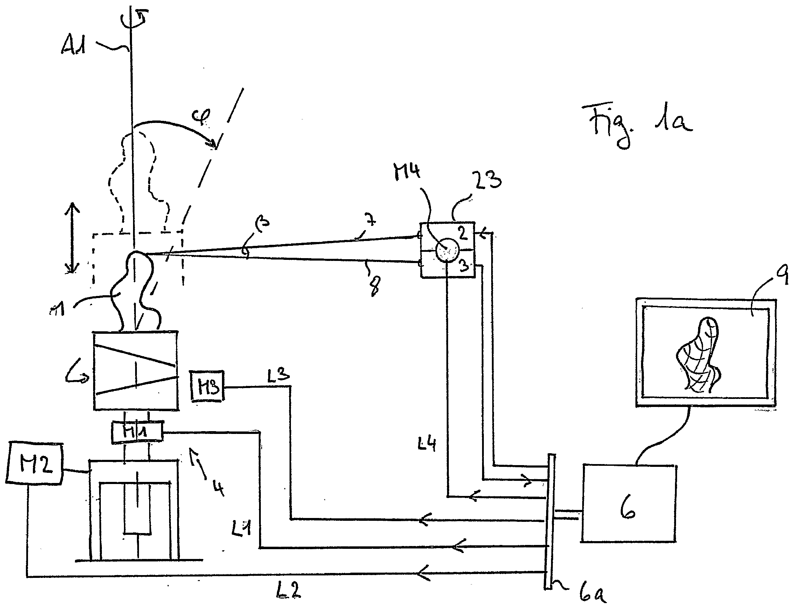

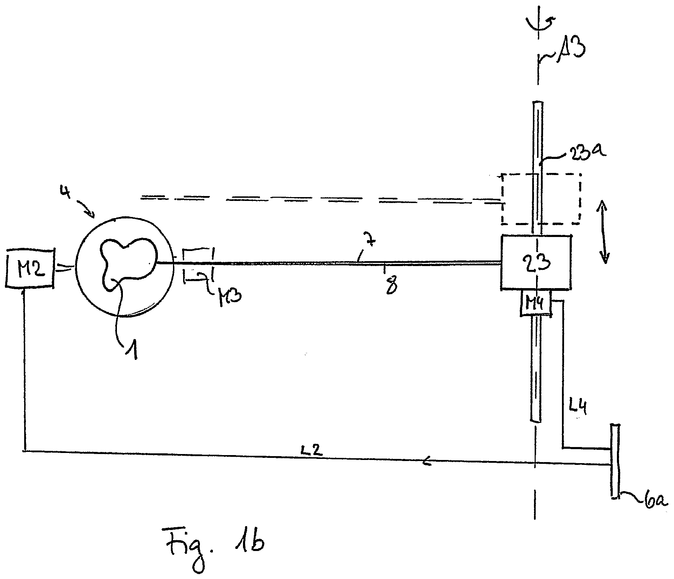

Eine Ausführungsform der erfindungsgemässen Abtastanordnung ist in Fig. 1a und 1b dargestellt. Objekt 1, Lichtsender 2 und Lichtempfänger 3 befinden sich ungefähr auf der gleichen Höhe. Das Objekt 1 ist auf einer Haltevorrichtung 4 befestigt, die mittels Antriebs M1 um die Achse A1 drehbar ist und mittels Antriebs M2 entlang der Achse A1 in der Höhe bewegt werden kann, was mit gestrichelten Linien angedeutet ist. Ausserdem kann die Haltevorrichtung 4 mittels Antriebs M3 gegenüber der Drehachse A1 um den Winkel ϕ gekippt werden. Die Antriebe M1 bis M3 sind durch Leitungen L1 bis L3 und mit dem Interface 6a mit einer Steuerungs- und Rechnungseinheit 6 verbunden und durch diese ansteuerbar.

Der Lichtsender 2 und der Lichtempfänger 3 sind miteinander verbunden und bilden eine Sender-Empfänger-Einheit 23. Dadurch wird der Winkel β, der zwischen dem ausgesandten Lichtstrahl 7 und dem reflektierten Lichtstrahl 8 liegt, möglichst klein gehalten. Kleine Winkel β sind vorteilhaft, weil die Intensität des Reflexionsstrahls 8 dann am grössten ist, wenn der Einfallswinkel des Lichtes auf das Objekt nahe bei 90° liegt. Somit wird bei kleinem Winkel β eine möglichst grosse Lichtintensität des reflektierten Lichtstrahls gemessen. Ausserdem werden bei einem kleinen Winkel β Hinterschneidungen besser erfasst; zum Erfassen eines Datenpunktes darf weder der einfallende Strahl 7 noch der reflektierte Strahl 8 von einer Hinterschneidung abgeschnitten werden.

Die Sender-Empfänger-Einheit 23 ist mittels Antriebs M4 um die zur Bildebene senkrecht stehende Achse A3 bzw. die Schiene 23a (Fig. 1b) schwenkbar und entlang der Schiene 23a verschiebbar. Die Schiene 23 ist nicht zwingendermassen gerade, wie hier dargestellt, sondern kann auch gebogen sein, z.B. auf einem Kreisabschnitt um das Objekt 4 liegen.

Beim Schwenken um die Achse A3 ist es möglich, dass die Sender-Empfänger-Einheit 23 mittels Antriebs M4 kontinuierlich verstellt und in beliebigen Positionen arretiert wird. Es ist aber auch denkbar, dass die Sender-Empfänger-Einheit 23 in vorbestimmten Winkelpositionen einrastet. Entlang der Schiene 23a ist die Sender-Empfänger-Einheit 23 vorteilhaft kontinuierlich durch den Antrieb M4 verschiebbar, z.B. mit einem Linearmotor. Selbstverständlich ist aber auch ein Schrittmotor oder ein Servomotor denkbar. Der Antrieb M4 ist durch die Leitung L4 und das Interface 6a ebenfalls mit der Steuerungs- und Rechnungseinheit 6 verbunden und wird durch diese gesteuert.

Sowohl der Lichtsender 2 als auch der Lichtempfänger sind mit der Steuerungs- und Rechnungseinheit 6 verbunden. Die Steuerungs- und Rechnungseinheit 6 ist in diesem Beispiel ein handelsüblicher Computer, auf dem ein entsprechendes Software-Produkt installiert ist. Der Computer kann mitgeliefert oder vom Anwender selbst angeschlossen werden.

Von der Steuerungs- und Rechnungseinheit 6 aus wird die Position der Haltevorrichtung 4 und der Sender-Empfänger-Einheit 23 durch Ansteuerung der Antriebe M1 bis M4 gelenkt und kontrolliert. Die vom Empfänger 3 erhaltenen Daten werden durch eine Verbindungsleitung 10 an die Steuerungs- und Rechnungseinheit 6 abgegeben und dort gespeichert und ausgewertet. Die Steuerungs- und Rechnungseinheit 6 ist mit einem Bildschirm 9 verbunden, auf dem die digitale Darstellung des Objekts 1 sichtbar gemacht wird. Es ist auch möglich, dass die Steuerungs- und Rechnungseinheit 6 mit einer Fräsmaschine oder dergleichen verbunden ist, um eine dreidimensionale Kopie des Objekts anzufertigen.

Zum Messen wird das Objekt 1 bei mindestens einem Messabschnitt um die Achse A1 rotiert und entlang der Achse A1 in Richtung des Pfeils bewegt, während die Sender-Empfänger-Einheit 23 in einer festen Position ruht. So entsteht durch den Lichtstrahl 7,8 und die vom Lichtempfänger 3 gemessenen Messwerte eine fortlaufende Linie von Messpunkten auf der Oberfläche des Objekts 1. Wenn das Objekt 1 entlang der Achse A1 ausgerichtet ist, winden sich die Messpunkte spiralförmig um das Objekt 1. Wird das Objekt 1 vor dem Messabschnitt gegenüber der Achse A1 um den Winkel ϕ gekippt, so beschreiben die Messpunkte eine fortlaufende Schlangenlinie auf der Oberfläche des Objekts 1.

Wenn das Objekt abgetastet wird, ohne zu rotieren, so wird die Sender-Empfänger-Einheit 23 zum Messen entlang der Achse A3 bewegt (Fig. 1b). Das Objekt wird entlang der Achse A1 bewegt. Eine Seite des Objekts wird dann mit parallel einfallenden Lichtstrahlen 7 abgetastet. Es wird sowohl auf dem Hin- als auch auf dem Rückweg der Sender-Empfänger-Einheit 23 abgetastet, was dazu führt, dass das Objekt mit einer zickzackförmigen Linie abgetastet wird. Wenn hingegen nur gemessen würde, wenn die Einheit 23 in eine Richtung bewegt wird, so würden parallele Linien auf der Oberfläche des Objekts entstehen.

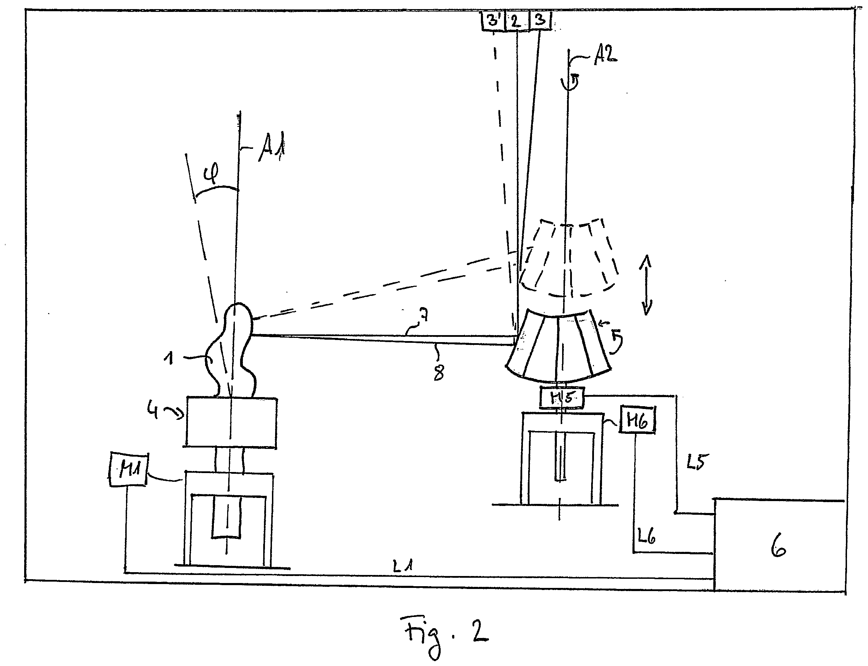

In Fig. 2 ist eine weitere mögliche Ausführungsform der erfindungsgemässen Abtastanordnung schematisch dargestellt. In dieser Ausführungsform ist der Laserlichtsender 2 fest montiert und sendet das Licht etwa vertikal nach unten aus. Der Lichtstrahl 7 wird über eine Spiegelanordnung 5 auf das Objekt 1 gelenkt. Ein Anteil des reflektierten Lichtes gelangt ebenfalls über die Spiegelanordnung 5 in den Empfänger 3, der mit der Steuerungs- und Rechnungseinheit 6 in Verbindung steht. Die vom Empfänger 3 erhaltenen Daten werden in der Einheit 6 gespeichert und weiterverarbeitet. Die Steuerungs- und Rechnungseinheit 6 ist in diesem Fall ein fest in der Anordnung integrierter Rechner, der mit einem externen Computer verbunden werden kann. Die Ansteuerung der Steuerungs- und Rechnungseinheit 6 erfolgt dann über den externen Computer. Die erfassten Messdaten werden in der Einheit 6 ausgewertet, über den externen Computer wird dem Benutzer Zugriff auf die ausgewerteten Daten gewährt.

Eine farbempfindliche CCD-Kamera 3' tastet analog dem Empfänger 3 die Oberfläche des Objekts 1 ab, die vom Lichtstrahl 7 beleuchtet wird. Die Kamera 3' erzeugt ein Hilfssignal, welches Information über die Oberflächenbeschaffenheit und über die Form und Grösse des Lichtpunktes auf dem Objekt enthält. Insbesondere sind das Werte über die Farbe, Helligkeit, Reflektivität und Mattheit der Oberfläche des Objekts in der Umgebung des Lichtpunkts, sowie die Abweichung der Kreisform und die Grösse des Lichtpunkts selbst.

Der Empfänger 3 ist direkt neben dem Sender 2 angeordnet, so dass das reflektierte Licht 8 über die Spiegelanordnung 5 in den Empfänger 3 und die Kamera 3' gelenkt wird. Das ist möglich, weil die Reflexion diffus in alle Richtungen stattfindet. Da die Empfänger 3 und 3' gleich weit vom Sender 2 entfernt sind, wird in beiden Empfängern 3 und 3' etwa gleich viel Licht empfangen. Der in den Empfänger 3' reflektierte Lichtstrahl 8' ist gepunktet dargestellt. Die Positionierung des Empfängers 3' ist ebenfalls nicht einschränkend zu verstehen, der Empfänger 3' könnte auch anders platziert werden. Wesentlich ist, dass der Empfänger 3' die für das Hilfssignal notwendige Information erfassen kann.

Da der Sender 2 und der Empfänger 3 unmittelbar nebeneinander angeordnet sind, wird der Winkel β zwischen dem ausgesandten Lichtstrahl 7 und dem reflektierten Lichtstrahl 8 klein gehalten. Es ist ausserdem vorteilhaft, dass beide Strahlen 7 und 8 über die Spiegelanordnung gelenkt werden, weil somit der ausgesandte Strahl 7 und der reflektierte Strahl 8 den gleichen Bedingungen unterworfen sind. Alternativ könnte der Empfänger 3 auch auf der gleichen Höhe wie das Objekt 1 angeordnet sein, wobei darauf zu achten wäre, dass er nicht im Schatten der Spiegelanordnung 5 steht. So könnte der Winkel β ebenfalls klein gehalten werden.

Das Objekt 1 wird von der Haltevorrichtung 4 gehalten. Die Haltevorrichtung 4 ist um die Achse A1 drehbar. Das Objekt 1 ist ausserdem gegenüber der .Achse A1 um einen Winkel ϕ kippbar, was mit gestrichelten Linien angedeutet ist.

Die Spiegelanordnung 5 ist mittels Antriebs M5 um die Drehachse A2 drehbar und mittels Antriebs M6 entlang der Drehachse A2 in der Höhe verstellbar. Die Antriebe M5 und M6 sind durch die Leitungen L5 und L6 mit der Steuerungs- und Rechnungsanordnung 6 verbunden. Mit gestrichelten Linien ist die Spiegelanordnung 5 dargestellt, nachdem sie in der Höhe verstellt wurde und ein anderer Spiegel S ausgewählt wurde, mit welchem der Lichtstrahl 7 von oben auf das Objekt 1 gelenkt wird.

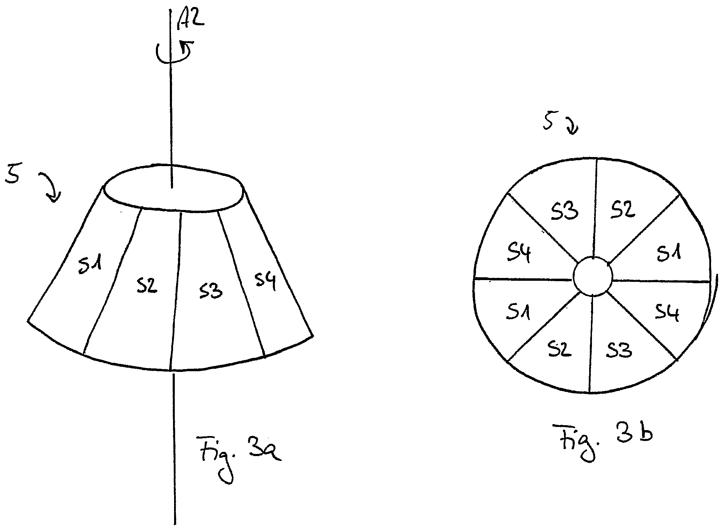

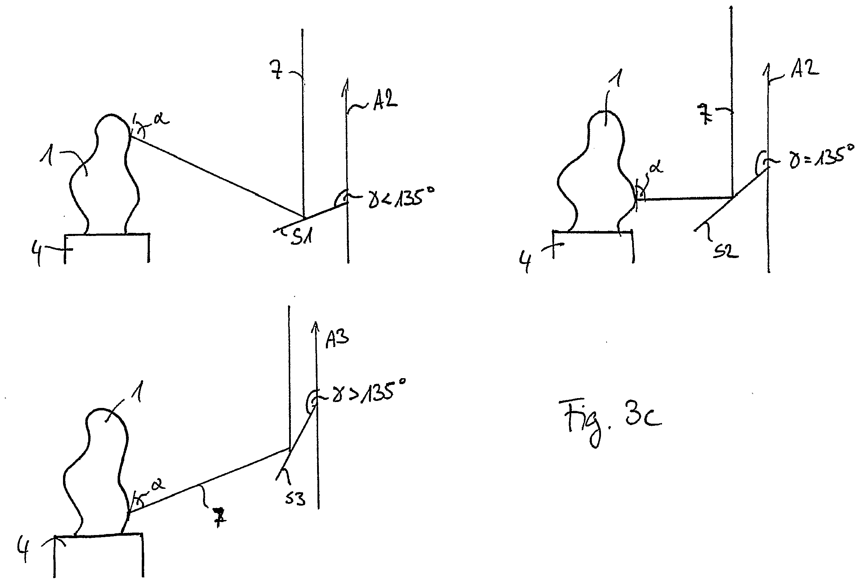

Die Anordnung der Spiegel S1 bis S4 ist im Zusammenhang mit Fig. 3 näher erläutert. Der Lichtstrahl 7 wird wie in Fig. 3c dargestellt in verschiedenen Höhen auf das Objekt gelenkt. Alternativ wäre es auch möglich, dass statt der Spiegelanordnung 5 die Haltevorrichtung 4 in der Höhe verstellbar angeordnet wird. Erfindungsgemäss wird der Lichtstrahl über eine Spiegelanordnung auf das Objekt gelenkt und umfasst die Spiegelanordnung mehrere Spiegel, welche um eine gemeinsame Drehachse gedreht werden, wobei die Spiegel in unterschiedlichen Winkeln zur Drehachse befestigt sind. Ein grosser Vorteil der gezeigten Anordnung ist deren Stabilität, sowie die Geschwindigkeit der Abtastung unter verschiedenen Winkeln und aus verschiedenen Spiegelpositionen, um Hinterschneidungen auszuleuchten.

Gemäss Fig. 3a und 3b sind acht Spiegel S1 bis S4 kegelförmig um die Drehachse A2 herum angeordnet. Jeweils zwei gegenüberliegende Spiegel weisen die gleiche Neigung γ auf. Die Neigungswinkel γ können beliebig gewählt werden; bei senkrechtem Lichteinfall haben sich Winkel im Bereich von 120° bis 150° als vorteilhaft erwiesen. Durch die unterschiedlichen Neigungen der Spiegel S wird der Lichtstrahl 7 je nach dem welcher Spiegel sich im Strahlengang 7,8 befindet unter unterschiedlichen Winkeln α auf das Objekt 1 gelenkt, wie in Fig. 3c dargestellt. In den einzelnen Teilbildern befindet sich jeweils ein anderer Der Spiegel S1 bis S4 im Strahlengang 7,8. Bei Neigungswinkeln γ von über als 135° trifft der Lichtstrahl 7 von oben auf das Objekt 1 auf, bei unter 135° von unten, und bei 135° trifft der Lichtstrahl genau horizontal° auf das Objekt 1 auf. Dadurch können verschiedene Bereiche des Objekts 1 abgetastet werden, oder der gleiche Bereich unter unterschiedlichen Winkeln.

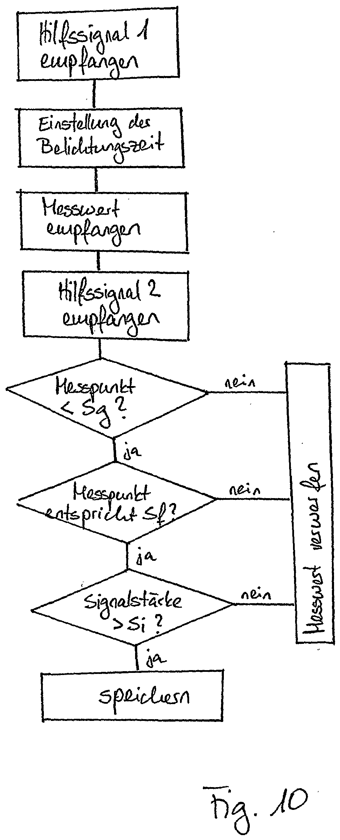

Bei sehr flachem Lichteinfall wird der Lichtpunkt auf dem Objekt 1 stark oval, die Intensität des reflektierten Strahls 8 wird klein. Solche Punkte können wegen ihrer grösseren Fehleranfälligkeit verworfen werden. Dies ist im Zusammenhang mit dem Flussdiagramm in Fig. 10 genauer erläutert.

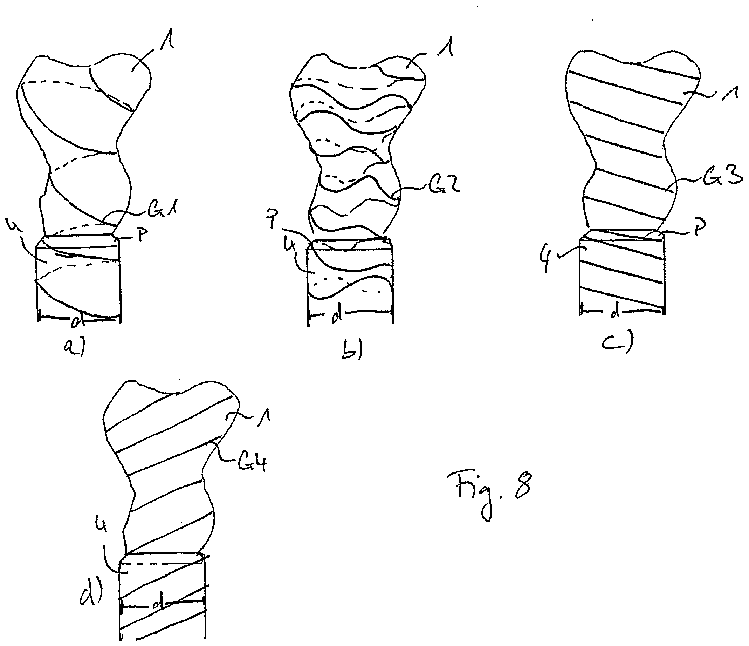

Durch Rotation der Haltevorrichtung 4 wird das Objekt 1 um die eigene Achse gedreht und auf Punkten der Umfangslinie abgetastet. Wird zugleich die Höhe der Spiegelanordnung verändert, so entsteht beim Abtasten eine spiralförmige Linie von Messpunkten um das Objekt 1, wie in Fig. 8a dargestellt. Der Abstand der Spiralwindungen hängt von der Vorschubgeschwindigkeit der Höhenverstellung durch Antrieb M6 (Fig. 2) ab. Wie dicht die Messpunkte aneinander liegen, wird durch die Rotationsgeschwindigkeit der Haltevorrichtung 4 bestimmt. Damit ein zuverlässiges dreidimensionales Bild aus den Messpunkten hergestellt werden kann, sollten die Messpunkte nicht mehr als 0,4 mm voneinander entfernt sein. Dies ist bei einfachen Formen des Objekts mit einer Rotationsgeschwindigkeit von 2,5 Umdrehungen pro Sekunde und einem Höhenvorschub von 0,3 mm pro Umdrehung möglich. Diese Angaben dienen nur der Erläuterung und sind nicht einschränkend zu verstehen.

Fig. 8b zeigt das Objekt für einen folgenden Messabschnitt um den Winkel ϕ gekippt (Fig. 1a und 2). Statt der spiralförmigen Linie, gemäss Fig. 8a entsteht eine taumelnde Schlangenlinie auf der Oberfläche des Objekts. Die Messlinien der beiden Messabschnitte sind dann auf jeden Fall nicht parallel.

Bei einem folgenden Messabschnitt wird das Objekt 1 stationär in verschiedenen Positionen abgetastet. Dabei werden ausgewählte Seiten des Objekts 1 während der Messabschnitte abgetastet, indem die Spiegelanordnung rotiert wird (Fig. 2 und 3). Dadurch wird der Strahl 7 linienförmig unter verschiedenen Winkeln α auf das Objekt 1 auftreffend über die der Spiegelanordnung 5 zugewandte Seite des Objekts 1 gelenkt. Die Geometrie der Spiegelanordnung 5 erlaubt, dass das Objekt 1 unter allen vorbestimmten Einfallswinkeln α beim einmaligen Abfahren der Höhe abgetastet wird. Dadurch kann gegenüber einer Anordnung, bei der die Höhe pro Winkel abgetastet werden muss, viel Zeit eingespart werden. Da immer zwei gegenüberliegende Spiegel S mit dem gleichen Neigungswinkel γ angebracht sind (Fig. 3b), ist es ausserdem möglich, die Spiegelanordnung 5 bei gleicher Drehzahl doppelt so schnell in der Höhe zu verschieben, wie wenn lauter unterschiedliche Spiegelneigungen eingestellt sind, ohne dass dabei die Messgenauigkeit abnimmt. Damit wird die Dauer des Abtastvorganges weiter verkürzt.

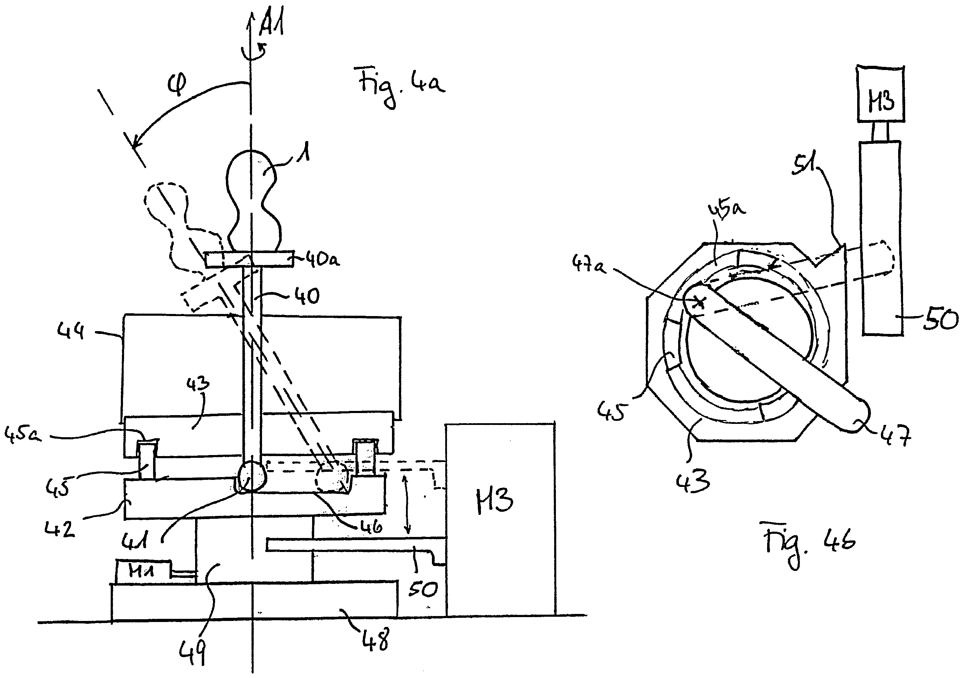

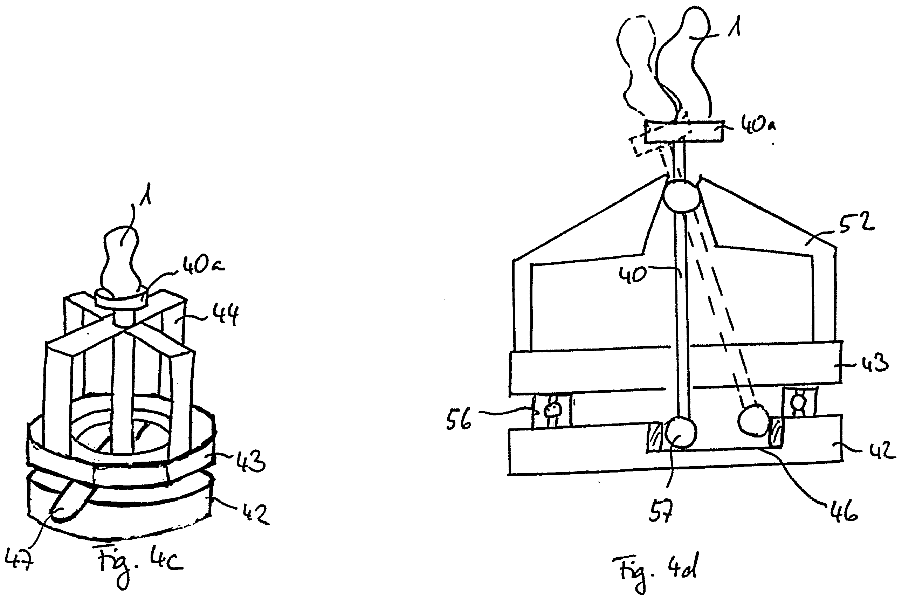

Eine Ausführungsform einer Haltevorrichtung 4 in den Fig. 4a bis 4e dargestellt. Fig. 4a zeigt eine Seitenansicht der Haltevorrichtung 4. Der obere Teil der Haltevorrichtung 4 ist gegenüber einer Grundplatte 48 mittels Antriebs M1 um die Achse A1 drehbar. In einem Gehäuse 49 befinden sich ein nicht dargestelltes Kugellager und eine ebenfalls nicht dargestellte Zahnradverbindung, über welche die Haltevorrichtung 4 mit dem Antrieb M1 verbunden ist. Das Objekt 1 wird auf einem Haltetisch 40a befestigt. Dieser Haltetisch 40a befindet sich auf einer Achse 40 und wird mit Federstahl-Streifen 44 in Position gehalten. Die Federstahl-Streifen 44 sind an einer Stützplatte 43 befestigt (Fig. 4c) .

Die Stützplatte 43 ist über Gleitlager-Körper 45 mit einer weiteren Stützplatte 42 verbunden. Am Ende der Achse 40 ist ein Kugelrad 41 befestigt, das in einer Ausnehmung 46 der Stützplatte 42 läuft.

Die Achse 40 kann in der Ausnehmung 46 zwei Positionen annehmen: Entweder sie steht senkrecht, d.h. parallel zur Drehachse A1 (mit ausgezogener Linie dargestellt), oder sie wird gegenüber der Drehachse A1 um den Winkel ϕ gekippt. Da das Rad 41 in der Ausnehmung 46 läuft, senkt sich das Objekt 1 durch das Kippen leicht ab. Die Kippbewegung wird mit einem Hebel 47 (Fig. 4b, 4c) erreicht. Der Hebel 47 befindet sich zwischen den beiden Stützplatten 42 und 43 und ist an der Platte 42 um den Drehpunkt 47a verschwenkbar befestigt.

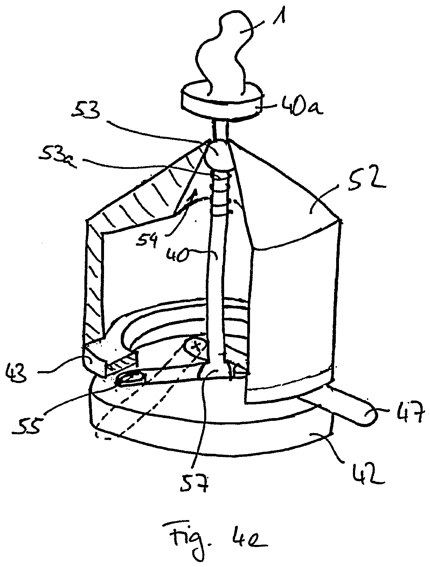

Eine Variante der Haltevorrichtung 4, bei der das Objekt nicht abgesenkt wird, ist weiter unten im Zusammenhang mit den Figuren 4d und 4e erläutert.

Der Hebel 47 wird mit einem Anschlag 50 betätigt, der mittels Antriebs M3 bewegt wird. Der Antrieb M3 ist ein Elektro-Hubmotor und der Anschlag 50 wird vertikal, also parallel zur Achse A1 bewegt. Zwei Positionen des Anschlags 50 sind Fig. 4a zu entnehmen. Mit ausgezogener Linie ist die Ruheposition dargestellt, der Anschlag 50 befindet sich unterhalb der Stützplatte 42. Mit gestrichelter Linie ist die Position dargestellt, in welcher der Hebel 47 betätigt werden kann. Der Anschlag 50 befindet sich von der Höhe her zwischen den beiden Platten 42 und 43, in der horizontalen Ebene ist er gemäss Fig. 4b neben den Stützplatten 42, 43 angeordnet.

In Fig. 4b ist die Platte 43 von unten abgebildet. Der Hebel 47 ist an der nicht sichtbaren Platte 42 befestigt.

Der Hebel 47 steht über die beiden Stützplatten 42 und 43 hinaus. Wenn der Anschlag 50 auf die Höhe des Hebels 47 gebracht wird (in Fig. 4a mit gestrichelten Linien dargestellt) und die Haltevorrichtung 4 mittels Antrieb M1 gedreht wird, wird der Hebel 47 durch den Anschlag 50 festgehalten. Wenn sich im Ablauf der Rotation die Stützplatte 43 weiterdreht, bringt der Hebel 47 die Achse 40 von der vertikalen Position (ausgezogene Linie) in die gekippte Position (gestrichelte Linie). Das Kippen des Objekts 1 wird also durch die Einstellung der Höhe für den Anschlag 50 mittels Antriebs M3 und beim Drehen der Haltevorrichtung 4 mittels Antriebs M1 erreicht.

Damit das Objekt 1 in verschiedene Richtungen relativ zur Drehachse A1 gekippt werden kann, ist die Stützplatte 43 mit den Federstahl-Streifen 44 und der Achse 40 gegenüber der Stützplatte 42 drehbar. Die Stützplatte 43 ist dazu auf Gleitlager-Körper 45 angeordnet und weist eine passende ringförmige Fuge 45a auf, in der die Lager-Körper 45 laufen. Die achteckige Grundform der Stützplatte 43 ist rein beispielhaft zu verstehen, andere Grundformen können ebenfalls zum gleichen Zweck verwendet werden.

Wenn sich die Achse 40 in der vertikalen Position befindet, also parallel zur Drehachse A1 ist, kann der Anschlag 50 auf die Höhe der Stützplatte 43 gebracht werden und die Haltevorrichtung mittels Antriebs M1 um die Achse A1 gedreht werden. Sobald die Anschlagkante 51 auf den Anschlag 50 stösst, werden die Stützplatte 43 und die daran befestigten Elemente 40, 40a und 44 gegenüber der Stützplatte 42 und der Ausnehmung 46 verdreht. Da mittels Antriebs M1 eine kontinuierliche Drehung möglich ist, kann die Stützplatte 43 um jeden beliebigen Winkel gegenüber der Stützplatte 42 verdreht werden.

Wenn der Antrieb M1 angehalten und der Anschlag 50 abgesenkt wird, ist die neue Winkelstellung der Platten 43 und 42 gegeneinander fixiert. Dies kommt daher, dass die Gleitlager-Körper 45 in der Fuge 45a einen so grossen Reibwiderstand aufweisen, dass sich die Platte 43 ohne äussere Einflüsse nicht gegen die Platte 42 dreht. Wenn nun erneut der Hebel 47 betätigt wird und die Achse 40 in die gekippte Position gebracht wird, so wird das Objekt 1 zwar wieder um den gleichen Winkel ϕ gekippt, die Kipprichtung ist aber eine andere. Da die Platten 42 und 43 um beliebige Winkel gegeneinander gedreht werden können, kann der Haltetisch 40a mit dem Objekt 1 in beliebige Richtungen um den Winkel ϕ gekippt werden.

Statt dass die Achse 40 aufgerichtet wird, wenn das Objekt 1 in eine andere Richtung gekippt werden soll, können die Platten 42 und 43 mit dem oben beschriebenen Mechanismus auch gegeneinander verdreht werden, während sich die Achse 40 in der gekippten Position befindet. Dies ist vom Bewegungsablauf her günstiger, weil die Achse 40 nur einmal gekippt werden muss, die Wirkung ist aber die gleiche: Die Achse 40 wird relativ zur Abtastanordnung, insbesondere relativ zum einfallenden Lichtstrahl 7, in verschiedene Richtungen gekippt.

Der Hauptvorteil einer solchen Haltevorrichtung 4 ist, dass das Objekt in alle gewünschten Richtungen relativ zur Drehachse A1 um den Winkel ϕ gekippt werden kann, wobei die Herstellungskosten der Haltevorrichtung niedrig sind. Wenn im Hinblick auf das Messverfahren vermieden werden soll, dass das Objekt beim Kippen abgesenkt wird, lässt sich dies mit der Ausführungsform gemäss Fig. 4d und 4e erreichen.

Statt mit den Federstahl-Streifen 44 wird die Achse 40 mit einer konisch zulaufenden Kopfplatte 52 fixiert. Diese Kopfplatte 52 ist fest auf der Platte 43 befestigt und weist eine kegelförmige Öffnung 54 für die Achse 40 auf. Die Achse 40 ist mit einer kugel 53 in dieser Öffnung 54 fixiert. Die Kugel 53 wird mit einer Feder 53a in der kegelförmigen Öffnung 54 hoch gedrückt. Wenn nun die Achse 40 gekippt wird, beschreibt er eine Pendelbewegung, in welcher er durch Anschlagzylinder 55 begrenzt wird. Dazu ist das Rad 41 durch den Anschlagkörper 57 ersetzt worden.

Durch die Pendelbewegung befindet sich das Objekt 1 immer auf ungefähr gleicher Höhe. Die zylindrische Form der Anschläge 55 ist vorteilhaft, weil die Pendelbewegung der Achse 40 dadurch sehr exakt begrenzt ist, insbesondere, wenn der Anschlagkörper 57 kugelförmig ist. Die Anschläge 55 und 57 können aber jede geeignete Form annehmen.

Die Kopfplatte 52 gemäss Fig. 4d und 4e ist stabiler als die Federstahl-Streifen 44. Diese Variante der Haltevorrichtung ist also etwas robuster als die in den Fig. 4a bis 4c beschriebene. Der Kippmechanismus ist aber im Übrigen der gleiche. Ein Unterschied ist, dass das Gleitlager 45, 45a durch ein Kugellager 56 ersetzt wurde. Die Verdrehung der Platten 42 und 43 gegeneinander ist somit einfach zu erzeugen. Wenn die Platten 42 und 43 in einer Position fixiert werden sollen, ist aber eine Arretierung notwendig.

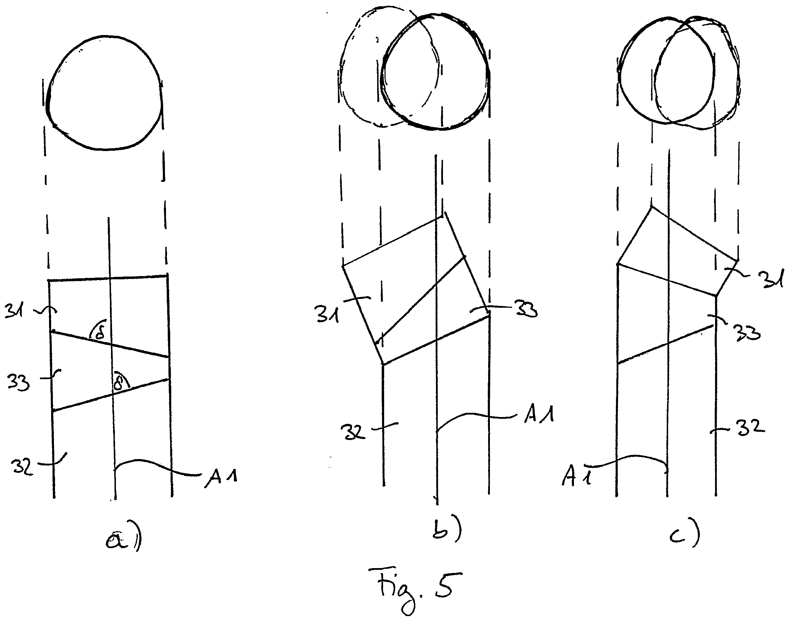

Alternativ kann die Haltevorrichtung 4 auch wie in Fig. 5 dargestellt gefertigt werden. Im Wesentlichen besteht sie aus zwei Zylinderabschnitten 31 und 32, die über einen keilförmig zugeschnittenen Zylinderabschnitt 33 miteinander verbunden sind. Die Flächen 31 und 32 stehen vorzugsweise unter den Winkeln δ und δ' von ca. 75 bis 85° zur Zylinderachse A1, wobei die beiden Winkel δ und δ' unterschiedlich sein können. Die Zylinderabschnitte 31 und 32 sind über ein Kugellager gegen den keilförmig zugeschnittenen Zylinderabschnitt 33 um mindestens 180° verdrehbar. Die Zylinderabschnitte 31 und 32 sind mittels einer Magnetbremse in beliebigen Positionen arretierbar. Einige Positionen sind in den Figuren 5a bis 5c dargestellt. Dank der Geometrie dieser Anordnung kann das Objekt 1 in unterschiedlichen Winkel ϕ zur vertikalen Achse A1 gekippt werden.

Das Kippen des Objekts um den Winkel ϕ bewirkt, dass das Gitter der Messpunkte auf dem Objekt 1 gekippt wird. Dies ist in Zusammenhang mit Fig. 8 näher erläutert. Die Gitterlinien G1 winden sich, wie in Fig. 8a dargestellt, spiralförmig um das Objekt 1 und entstehen, wenn das Objekt 1 während des Messabschnitts rotiert. Die Gitterlinien G2 gemäss Fig. 8b entstehen, wenn das Objekt 1 gegenüber der Position des Messabschnitts gemäss Fig. 8b um den Winkel ϕ gekippt wird und rotierend abgetastet wird. In Fig. 8c sind die Gitterlinien G3 dargestellt, die entstehen, wenn das Objekt während des Messabschnitts ruht und die Spiegelanordnung rotiert. Die Gitterlinien G4 entstehen, wenn das Objekt 1 um den Winkel ϕ gegenüber dem Messabschnitt gemäss Fig. 8c gekippt wird und dann linienförmig bei drehender Spiegelanordnung 5 abgetastet wird, ohne selber zu rotieren.

Wie aus Fig. 8 ersichtlich wird, ermöglicht das Kippen des Objekts 1 um den Winkel ϕ, dass neue Messpunkte erreicht werden und damit die Genauigkeit steigt. Ausserdem erhöht sich die Wahrscheinlichkeit, eine Hinterschneidung abtasten zu können.

Wie aus Fig. 8 ersichtlich, wird bei allen Messabschnitten die Haltevorrichtung 4 mitabgetastet. Die Fase P an der oberen Kante dient dabei von Referenzobjekt R zur Referenzierung des Messabschnitts. Der Durchmesser d der Haltevorrichtung 4 ist bekannt, ebenso die Grösse und der Winkel der Fase P selbst. Sämtliche Bewegungen der Haltevorrichtung 4 und der Spiegelanordnung 5 sind ebenfalls bekannt und wiederholbar.

Aufgrund dieser Informationen kann die Position der Messpunkte auf dem Objekt 1 in Relation zum Referenzobjekt auf der Haltevorrichtung 4 genau bestimmt werden, z.B. durch trigonometrische Betrachtungen. Jeder Messwert, der eine abstrakte Längenangabe darstellt, wird anhand der Information der Referenzierung an einem konkreten Punkt im virtuellen digitalen Gitter eingetragen. Für jeden Messabschnitt wird ein eigenes digitales Gitter verwendet. Dadurch entsteht bei jedem Messabschnitt eine neue "Wolke" von Datenpunkten in einem dreidimensionalen Gitter.

Falls die Haltevorrichtung 4 bei der Rotation nicht ganz rund läuft, wird dies durch Messung der Fase P als Referenzobjekt R mit erfasst und bei der Konstruktion des Bilds des Objekts 1 berücksichtigt. Damit wird die Messgenauigkeit weiter erhöht.

Weiter ist es von Vorteil, wenn bei jedem Messabschnitt referenziert wird, weil dadurch Schwankungen der Anordnung aufgrund von äusseren Einflüssen wie Temperatur oder mechanische Belastung das Messresultat nicht verfälschen. Das Zusammenlegen der Bilder von unterschiedlichen Messabschnitten wird ebenfalls einfacher, wenn bei jedem Messabschnitt referenziert wird, weil dann die Bilder der Referenzobjekte exakt übereinander gelegt werden können und dadurch die Bilder des Objekts ebenfalls genau übereinander liegen.

Übereinanderlegen der Bilder wird erreicht, indem die verschiedenen Bilder, die bei Messabschnitten entstehen, in ein gemeinsames Gitter eingetragen werden. Einige Punkte sind dann überbestimmt, d.h. wurden in mehreren Messabschnitten erreicht, im Idealfall jedoch ergänzen sich die Bilder der unterschiedlichen Messabschnitte wechselseitig.

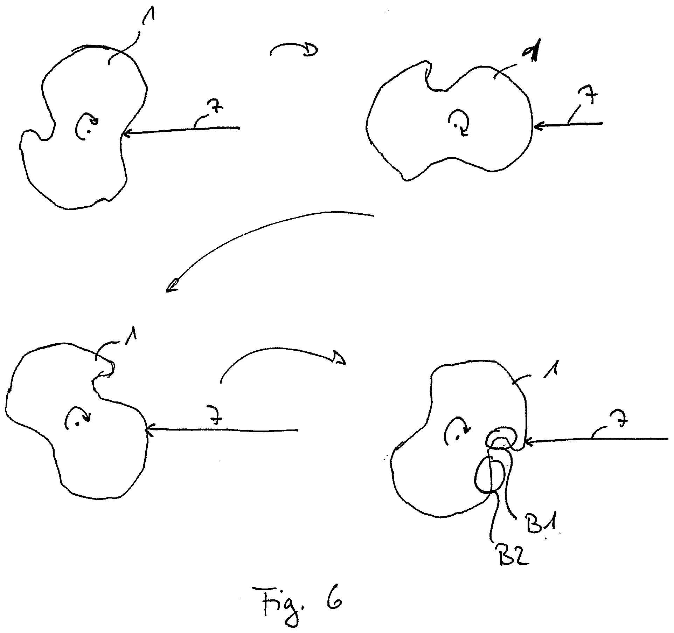

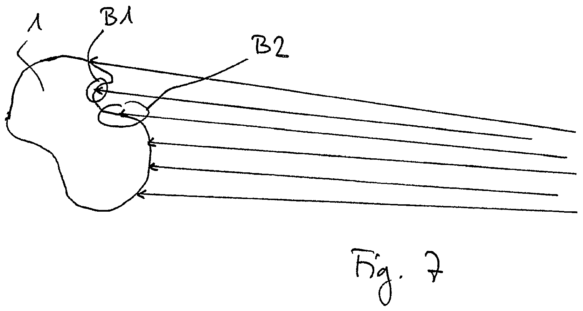

Wie in Zusammenhang mit den Figuren 6 und 7 erläutert, erhöht sich die Wahrscheinlichkeit, Hinterschneidungen zu erkennen, je mehr verschiedene Messmethoden angewendet werden. In Fig. 6 ist das Objekt 1 von oben dargestellt, die Lichtstrahlen 7 treffen bei der Rotation des Objekts 1 radial auf dieses auf. Es sind verschiedene Stellungen des Objekts als Zeitschritte der Rotation dargestellt. Der Bereich B1 der Oberfläche des Objekts 1 kann auf diese Art nicht abgetastet werden, weil die Lichtstrahlen 7 nicht in die Hinterschneidung hinein gelangen. Der Bereich B2 wird gut erfasst, die Lichtstrahlen fallen in diesem Bereich nahezu senkrecht auf die Oberfläche des Objekts auf.

In Fig. 7 ist das gleiche Objekt von oben dargestellt, diesmal wird es nicht rotierend in Linien abgetastet. Das Licht trifft nur auf einer Seite in ungefähr parallelen Strahlen auf das Objekt auf. Der Bereich B1 wird auf diese Art erreicht, weil der Einfallwinkel α des Lichtstrahls auf das Objekt verändert wurde. Der Bereich B2 hingegen wird nur sehr ungenau erfasst, weil die Lichtstrahlen 7 unter einem sehr kleinen Winkel α auf die Oberfläche des Objekts 1 fallen.

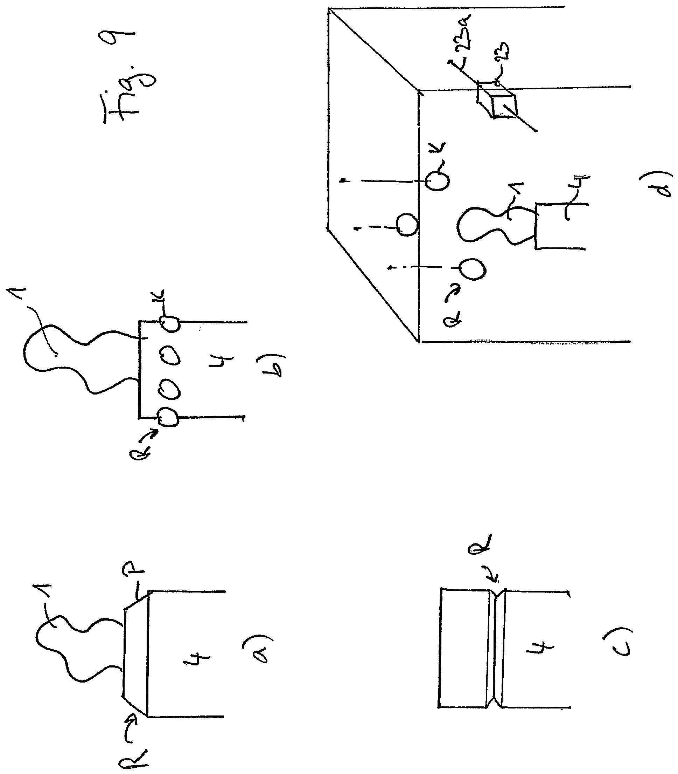

Verschiedene Formen von Referenzobjekten R sind in Fig. 9 dargestellt. Die Referenzobjekte R sind eindeutig, können aber vielerlei Formen und Platzierungen haben. Als Referenzobjekte können also eindeutig berechenbare Objekte oder auch eindeutig bekannte Flächen dienen, ein Referenzobjekt muss kein einzelner, isoliert stehender Körper sein.

Besonders bevorzugt sind Referenzobjekte R an der Haltevorrichtung, weil dabei die Bewegung der Referenzobjekte R und der Haltevorrichtung R übereinstimmt (Fig. 9a bis 9c). Insbesondere, wenn die Haltevorrichtung 4 stark bewegt wird, ist das von Vorteil, weil eventuelle Fehler in der Bewegung gemessen und berücksichtigt werden können.

In Fig. 9a bildet eine Fase P an der Haltevorrichtung 4 das Referenzobjekt R. Dies ist besonders geeignet, da zur Vermeidung von scharfen Kanten immer Fasen geschliffen werden. Die stärkere Ausprägung dieser Fase P erfordert keinen zusätzlichen Arbeitsschritt bei der Fertigung. Aufwendiger sind die Beispiele aus Fig. 9b und 9c. In Fig. 9b sind die Referenzobjekte R durch die kugelförmigen Ausbuchtungen K definiert, in Fig. 9c bildet eine ringförmige Eindellung an der Haltevorrichtung das Referenzobjekt.

Wenn die Referenzobjekte R wie in Fig. 9d nicht an der Haltevorrichtung 4 vorgesehen sind, müssen sie örtlich so angeordnet sein, dass sie das Objekt 1 nicht verdecken. Trotzdem müssen sie sich so nahe am Objekt 1 befinden, dass sie im Sichtbereich des Lichtstrahls liegen. Deshalb sind solche Referenzobjekte R weniger gut geeignet. Ausserdem sind freistehende Objekte bzw. Körper leicht zu beschädigen, so dass sie an Genauigkeit verlieren. Bevorzugt sind darum Referenzobjekte wie in den Figuren 9a bis 9c dargestellt.

In Fig. 10 ist mit Hilfe eines Flussdiagramms ein möglicher Weg der Messwertbearbeitung vor dem endgültigen Speichern aufgezeigt. Ein erstes Hilfssignal wird empfangen, das Information über die Helligkeit, Farbe und Reflektivität des Objekts im Bereich des auftreffenden Lichtstrahls enthält. Aufgrund dieser Information wird die Belichtungsdauer für einen Messpunkt und entsprechend die Geschwindigkeit des abtastenden Lichtstrahls über dem Objekt eingestellt. Anschliessend werden ein Messwert und ein zweites Hilfssignal zum gleichen Zeitpunkt aufgenommen. Mit Hilfe des Hilfssignals wird überprüft, ob die Ausdehnung des zugehörigen Messpunktes auf der Oberfläche des Objekts 1 einen Schwellwert Sp überschreitet. Ist dies der Fall, wird der Messwert wegen mangelnder Genauigkeit verworfen.

Im nächsten Schritt wird die Form des Messpunktes mit einer vorgegebenen Form Sf verglichen. Falls die Form des Messpunktes ausserhalb eines Toleranzbereichs liegt, z.B. zu stark elliptisch ist, wird der Messwert ebenfalls verworfen. Das Risiko, dass ungenaue Messwerte bei flachem Reflexionswinkel berücksichtigt werden, wird somit reduziert.

Schliesslich wird überprüft, ob die Signalstärke des Messwerts einen Schwellwert Si überschreitet. Falls dies nicht der Fall ist, wird der Messwert verworfen, da die Fehleranfälligkeit bei einem schwachen Signal höher ist. Überschreitet die Signalstärke des Messwerts diesen Schwellwert Si, so wird er gespeichert und beim Zusammenlegen der Messdaten in das virtuelle Gitter eingefügt.

Die Reihenfolge der in diesem Ablauf gezeigten Schritte ist nicht zwingend. Insbesondere die Reihenfolge der Schritte der Kontrollschritte kann variiert werden. Ausserdem sind nicht alle Schritte zur sicheren Datenauswertung notwendig, sie bilden zum Teil eine mehrfache Absicherung. Je nach Auswertung kann z.B. eine Methode zur Prüfung der Eigenschaften eines Messwerts ausreichen.

## Patentansprüche

1. Verfahren zum berührungslosen Abtasten von dreidimensionalen Objekten (1) mit einem gebündelten Lichtstrahl (7), vorzugsweise mit einem Laserstrahl, bei welchem das Objekt (1) durch mindestens zwei unterschiedliche Messabschnitte abgetastet wird und die Messwerte der Messabschnitte zusammengelegt werden, wobei
a) die Linien (G1-G4) der Messpunkte zweier unterschiedlicher Messabschnitte nicht parallel sind
und/oder
b) das Objekt (1) bei zwei unterschiedlichen Messabschnitten einmal rotiert und einmal nicht rotiert,
wobei der Lichtstrahl (7) über eine Spiegelanordnung (5) auf das Objekt (1) gelenkt wird und die Spiegelanordnung (5) mehrere Spiegel (S1-S4) umfasst, welche um eine gemeinsame Drehachse (A2) gedreht werden, wobei die Spiegel (S1-S4) in unterschiedlichen Winkeln (γ) zur Drehachse (A2) befestigt sind.

2. Verfahren gemäss Anspruch 1, **dadurch gekennzeichnet, dass** das Objekt bei mindestens einem Messabschnitt gegenüber der Position einem früheren Messabschnitt gekippt wird.

3. Verfahren gemäss einem der Ansprüche 1 und 2, **dadurch gekennzeichnet, dass** das Objekt (1) bei mindestens einem Messabschnitt abgetastet wird, während es um eine Drehachse (A1) rotiert, wobei die Lichtquelle (2) und/oder eine Spiegelanordnung (5) zum Umlenken des Lichtstrahls und das Objekt (1) relativ zueinander bewegt werden, so dass die Messpunkte entlang einer Linie (G1, G2) auf der Oberfläche des Objekts (1) verlaufen.

4. Verfahren gemäss einem der Ansprüche 1 bis 3, **dadurch gekennzeichnet, dass** der Lichtstrahl (7) bei mindestens einem Messabschnitt in ungefähr parallelen Linien (G3, G4) über das nicht rotierende Objekt (1) bewegt wird.

5. Verfahren gemäss einem der Ansprüche 1 bis 4, **dadurch gekennzeichnet, dass** der Lichtstrahl (7) bei mindestens einem Messabschnitt in zickzackförmigen Linien, deren Spitzen ausserhalb des Objekts (1) liegen können, über das nicht rotierende Objekt (1) bewegt wird.

6. Verfahren gemäss einem der Ansprüche 1 bis 5, **dadurch gekennzeichnet, dass** das Laserlicht (7) unter unterschiedlichen Winkeln (α) zur Oberfläche des Objektes (1) auf das Objekt (1) gelenkt wird.

7. Verfahren gemäss einem der Ansprüche 1 bis 6, **dadurch gekennzeichnet, dass** bei vorbestimmten Messabschnitten wenigstens ein Referenzobjekt (R) ausserhalb des Objektes (1) zusätzlich zum Objekt (1) mitabgetastet wird.

8. Verfahren gemäss Anspruch 7, **dadurch gekennzeichnet, dass** als Referenzobjekt (R) ein vorbestimmter Teil einer Haltevorrichtung (4) für das Objekt (1) mitabgetastet wird.

9. Verfahren gemäss einem der Ansprüche 1 bis 8, **dadurch gekennzeichnet, dass** ein Hilfssignal erzeugt wird, welches Information über die Oberflächenbeschaffenheit des Objekts (1) und/oder über die Eigenschaften des auf dem Objekt (1) auftreffenden Lichtstrahls (7) enthält.

10. Verfahren gemäss Anspruch 9, **dadurch gekennzeichnet, dass** das Hilfssignal mit einem vorzugsweise farbempfindlichen Lichtempfänger (3, 3'), insbesondere mit einer Kamera, besonders bevorzugt einer CCD-Kamera, erzeugt wird.

11. Verfahren nach Anspruch 9 oder 10, **dadurch gekennzeichnet, dass** Messwerte aufgrund ihrer Signalstärke und/oder aufgrund der im Hilfssignal enthaltenen Information verworfen werden.

12. Verfahren gemäss einem der Ansprüche 9 bis 11, **dadurch gekennzeichnet, dass** die Lichtstärke des Lichtstrahls (7) aufgrund der im Hilfssignal enthaltenen Information variiert wird.

13. Verfahren gemäss einem der vorangehenden Ansprüche,
**dadurch gekennzeichnet,**
**dass** das Objekt (1) mindestens einmal rotierend und mindestens einmal nicht rotierend abgetastet wird,
**dass** das Objekt (1) mindestens bei einem Messabschnitt gegenüber der Position einem früheren Messabschnitt gekippt wird,
**dass** der Lichtstrahl (7) über eine drehbare Spiegelanordnung (5) auf das Objekt (1) gelenkt wird und
**dass** bei jedem Messabschnitt ein Teil der Haltevorrichtung (4) zur Referenzierung mitabgetastet wird.

14. Abtastanordnung zum berührungslosen Abtasten von dreidimensionalen Objekten (1), welche einen Sender (2) zum Aussenden von gebündelten Lichtstrahlen (7), insbesondere Laserstrahlen, und einen Empfänger (3) zum Erfassen von Lichtsignalen (8) umfasst, eine Haltevorrichtung (4) zur Aufnahme des Objektes (1) aufweist und mit einer Steuerungs- und Rechnungsanordnung (6) verbunden oder verbindbar ist, wobei eine Auslenkanordnung (4, 5, 23a) zum Auslenken des Lichtstrahls (7) über die Oberfläche des Objekts (1) vorgesehen ist, mittels welcher das Objekt (1) durch mindestens zwei unterschiedliche Messabschnitte abtastbar ist, wobei
a) mittels der Auslenkanordnung (4, 5, 23a) das Objekt (1) durch mindestens zwei unterschiedliche Messabschnitte derart abtastbar ist, dass bei zwei unterschiedlichen Messabschnitten die Linien (G1-G4) der Messpunkte nicht parallel sind,
und/oder
b) das Objekt während des einen Messabschnitts rotiert und während des anderen nicht,
wobei eine Spiegelanordnung (5) zum Umlenken des Lichtstrahls (7) auf das Objekt (1) vorgesehen ist, die mehrere Spiegel (S1-S4) umfasst, welche um eine gemeinsame Drehachse (A2) drehbar angeordnet sind, wobei die Spiegel (S1-S4) in unterschiedlichen Winkeln (γ) zur Drehachse (A2) befestigt sind.

15. Abtastanordnung gemäss Anspruch 14, **dadurch gekennzeichnet, dass** die Haltevorrichtung (4) für das Objekt um eine Drehachse (A1) drehbar ist.

16. Abtastanordnung gemäss Anspruch 14 oder 15, **dadurch gekennzeichnet, dass** eine Anordnung zum Kippen des Objekts (1) für einen Messabschnitt gegenüber der Position des Objekts (1) bei einem anderen Messabschnitt vorgesehen ist.

17. Abtastanordnung gemäss einem der Ansprüche 14 bis 16, **dadurch gekennzeichnet, dass** der einfallende Lichtstrahl (7) und die Haltevorrichtung (4) derart relativ zueinander verstellbar sind, dass der Lichtstrahl (7) über das gesamte Objekt (1) lenkbar ist.

18. Abtastanordnung gemäss einem der Ansprüche 14 bis 17, **dadurch gekennzeichnet, dass** die Auslenkanordnung (4, 5, 23) zum Lenken des Lichtstrahls (7) in etwa parallelen Linien (G3, G4) über das nicht rotierende Objekt (1) vorgesehen ist.

19. Abtastanordnung gemäss einem der Ansprüche 14 bis 18, **dadurch gekennzeichnet, dass** die Auslenkanordnung (4, 5, 23) zum Lenken des Lichtstrahls (7) in etwa zickzackförmigen Linien über das nicht rotierende Objekt (1) vorgesehen ist, wobei die Umkehrpunkte der Zickzacklinie ausserhalb des Objekts (1) liegen können.

20. Abtastanordnung gemäss einem der Ansprüche 14 bis 19, **dadurch gekennzeichnet, dass** die Auslenkanordnung (4, 5, 23) zum Lenken des Lichtstrahls (7) unter unterschiedlichen Winkeln (α) zur Oberfläche des Objekts über das Objekt vorgesehen ist.

21. Abtastanordnung gemäss einem der Ansprüche 14 bis 20, **dadurch gekennzeichnet, dass** die Spiegel (S1-S4) der Spiegelanordnung (5) in wenigstens zwei identische Gruppen unterteilbar sind, wobei innerhalb jeder Gruppe alle Spiegel (S1-S4) unter unterschiedlichen Winkeln (γ) zur Drehachse (A1) befestigt sind und die Gruppen aufeinander folgend um die Drehachse (A1) angeordnet sind.

22. Abtastanordnung gemäss einem der Ansprüche 14 bis 21, **dadurch gekennzeichnet, dass** eine Anordnung zum Erzeugen eines Hilfssignals vorgesehen ist, in welchem Information über Oberflächeneigenschaften des Objekts (1) und/oder über die Eigenschaften des abtastenden Lichtstrahls (7) auf dem Objekt (1) enthalten ist.

23. Abtastanordnung gemäss Anspruch 22, **dadurch gekennzeichnet, dass** ein vorzugsweise farbempfindlicher Lichtempfänger, insbesondere eine Kamera, bevorzugt eine CCD-Kamera (3') zum Erfassen der Lichtintensität, der geometrischen Form und/oder der Ausdehnung des Lichtstrahls auf der Oberfläche des Objektes (1) und/oder der Farbe und/oder des Reflektivitätswertes der Oberfläche des Objekts im Bereich des Lichtstrahls auf dem Objekt als Kriterium zum Erzeugen des Hilfssignals vorgesehen ist.

24. Abtastanordnung gemäss Anspruch 22 oder 23, **dadurch gekennzeichnet, dass** das Hilfssignal und das Messsignal im gleichen Empfänger erfassbar sind.

25. Abtastanordnung gemäss einem der Ansprüche 14 bis 24, **dadurch gekennzeichnet, dass** die Anordnung mindestens ein Referenzobjekt (R) zur Referenzierung der Messpunkte aufweist, welches eindeutig ist, wobei bei vorbestimmten Messabschnitten mindestens ein Referenzobjekt (R) abtastbar ist.

26. Abtastanordnung gemäss Anspruch 25, **dadurch gekennzeichnet, dass** mindestens ein Referenzobjekt (R) auf der Haltevorrichtung (4) liegt oder durch einen Teil der Haltevorrichtung (4) gebildet wird.

27. Abtastanordnung gemäss einem der Ansprüche 25 oder 26, **dadurch gekennzeichnet, dass** das Referenzobjekt (R) durch eine konische Fläche (P) auf der Haltevorrichtung (4) gebildet wird.

28. Abtastanordnung gemäss einem der Ansprüche 25 bis 27, **dadurch gekennzeichnet, dass** wenigstens ein Referenzobjekt (R) durch einen wenigstens teilweise kugelförmigen Körper (K) gebildet wird.

## Claims

1. A method for the contactless scanning of three-dimensional objects (1) by means of a collimated light beam (7), preferably by means of a laser beam, in which the object (1) is scanned by at least two different measuring sections and the measurement values of the measuring sections are combined, wherein
a) the lines (G1-G4) of the measurement points of two different measuring sections are not parallel
and/or
b) the object (1) rotates in one measuring section and not in the other in the case of two different measuring sections,
wherein the light beam (7) is directed to the object (1) via a mirror arrangement (5) and the mirror arrangement (5) comprises a number of mirrors (S1-S4) which are rotatable about a common axis (A2), wherein the mirrors (S1-S4) are mounted at different angles (γ) to the axis of rotation (A2).

2. The method as claimed in claim 1, **characterized in that** the object is tilted in at least one measuring section compared with the position of an earlier measuring section.

3. The method as claimed in one of claims 1 and 2, **characterized in that** the object (1) is scanned in at least one measuring section while it is rotating about an axis of rotation (A1), wherein the light source (2) and/or a mirror arrangement (5) are moved relative to one another for deflecting the light beam and the object (1) so that the measurement points extend along a line (G1, G2) on the surface of the object (1).

4. The method as claimed in one of claims 1 to 3, **characterized in that** the light beam (7) is moved in approximately parallel lines (G3, G4) over the non-rotating object (1) in at least one measuring section.

5. The method as claimed in one of claims 1 to 4, **characterized in that** the light beam (7) is moved over the non-rotating object (1) in zigzag-shaped lines, the peaks of which can be located outside the object (1), in at least one measuring section.

6. The method as claimed in one of claims 1 to 5, **characterized in that** the laser light (7) is directed onto the object (1) at different angles (α) with respect to the surface of the object (1).

7. The method as claimed in one of claims 1 to 6, **characterized in that** at least one reference object (R) outside the object (1) is also scanned additionally to the object (1) in predetermined measuring sections.

8. The method as claimed in claim 7, **characterized in that** a predetermined part of a device (4) for holding the object (1) is also scanned as reference object (R).

9. The method as claimed in one of Claims 1 to 8, **characterized in that** an auxiliary signal is generated which contains information on the surface characteristic of the object (1) and/or about the characteristics of the light beam (7) impinging on the object (1).

10. The method as claimed in claim 9, **characterized in that** the auxiliary signal is generated by means of a preferably color-sensitive light receiver (3, 3'), particularly by means of a camera, especially preferably a CCD camera.

11. The method as claimed in claim 9 or 10, **characterized in that** measurement values are discarded on the basis of their signal strength and/or on the basis of the information contained in the auxiliary signal.

12. The method as claimed in one of claims 9 to 11, **characterized in that** the light intensity of the light beam (7) is varied on the basis of the information contained in the auxiliary signal.

13. The method as claimed in one of the preceding claims, **characterized in that** the object (1) is scanned at least once when rotating and at least once when not rotating, **in that** the object (1) is tilted in at least one measuring section compared with the position of an earlier measuring section, that the light beam (7) is directed to the object (1) via a rotatable mirror arrangement (5) and **in that** a part of the holding device (4) is also scanned for referencing in each measuring section.

14. A scanning arrangement for the contactless scanning of three-dimensional objects (1) which comprises a transmitter (2) for emitting collimated light beams (7), particularly laser beams, and a receiver (3) for detecting light signals (8), a holding device (4) for receiving the object (1) and is or can be connected to a control and computing arrangement (6), wherein a deflection arrangement (4, 5, 23a) for deflecting the light beam (7) over the surface of the object (1) is provided, by means of which the object (1) can be scanned by at least two different measuring sections, wherein
a) by means of the deflection arrangement (4, 5, 23a), the object (1) is scannable by at least two different measuring sections in such a way that the lines (G1-G4) of the measurement points are not parallel in two different measuring sections
and/or
b) the object rotates during one measuring section and does not during the other one,
wherein a mirror arrangement (5) for deflecting the light beam (7) to the object (1) is provided which comprises a number of mirrors (S1-S4) which are arranged to be rotatable about a common axis (A2), wherein the mirrors (S1-S4) are mounted at different angles (γ) to the axis of rotation (A2).

15. A scanning arrangement as claimed in claim 14, **characterized in that** the holding device (4) for the object is rotatable about an axis of rotation (A1).

16. The scanning arrangement as clamed in claim 14 or 15, **characterized in that**, for one measuring section, an arrangement for tilting the object (1) compared with the position of the object (1) in another measuring section is provided.

17. The scanning arrangement as claimed in one of claims 14 to 15, **characterized in that** the incident light beam (7) and the holding device (4) can be adjusted relative to one another in such a manner that the light beam (7) can be directed over the entire object (1).

18. The scanning arrangement as claimed in one of claims 14 to 17, **characterized in that** the deflection arrangement (4, 5, 23) is provided for directing the light beam (7) in approximately parallel lines (G3, G4) over the non-rotating object (1).

19. The scanning arrangement as claimed in one of claims 14 to 18, **characterized in that** the deflection arrangement (4, 5, 23) is provided for directing the light beam (7) in approximately zigzag-shaped lines over the non-rotating object (1), wherein the reversing points of the zigzag line can lie outside the object (1).

20. The scanning arrangement as claimed in one of claims 14 to 19, **characterized in that** the deflection arrangement (4, 5, 23) is provided for directing the light beam (7) over the object at different angles (α) to the surface of the object.

21. The scanning arrangement as claimed in one of claims 14 to 20, **characterized in that** the mirrors (S1-S4) of the mirror arrangement (5) can be subdivided into at least two identical groups, wherein all mirrors (S1-S4) within each group are mounted at different angles (γ) to the axis of rotation (A1) and the groups are arranged following one another around the axis of rotation (A1).

22. The scanning arrangement as claimed in one of claims 14 to 21, **characterized in that** an arrangement for generating an auxiliary signal is provided which contains information about surface characteristics of the object (1) and/or about the characteristics of the scanning light beam (7) on the object (1) .

23. The scanning arrangement as claimed in claim 22, **characterized in that** a preferably color-sensitive light receiver, particularly a camera, preferably a CCD camera (3') is provided for detecting the light intensity, the geometric shape and/or the extent of the light beam on the surface of the object (1) and/or of the color and/or the value of reflectivity of the surface of the object in the area of the light beam on the object as a criterion for generating the auxiliary signal.

24. The scanning arrangement as claimed in claim 22 or 23, **characterized in that** the auxiliary signal and the measurement signal can be detected in the same receiver.

25. The scanning arrangement as claimed in one of claims 14 to 24, **characterized in that** the arrangement has at least one reference object (R) for referencing the measurement points, which is unambiguous, where at least one reference object (R) can be scanned in predetermined measuring sections.

26. The scanning arrangement as claimed in claim 25, **characterized in that** at least one reference object (R) is located on the holding device (4) or is formed by a part of the holding device (4).

27. The scanning arrangement as claimed in one of claims 25 or 26, **characterized in that** the reference object (R) is formed by a conical area (1') on the holding device (4).

28. The scanning arrangement as claimed in one of claims 25 to 27, **characterized in that** at least one reference object (R) is formed by an at least partially spherical body (K).

## Revendications

1. Procédé de balayage sans contact d'objets (1) tridimensionnels avec un rayonnement lumineux (7) focalisé, de préférence, avec un rayonnement laser, par lequel l'objet (1) est balayé par au moins deux sections de mesure différentes et les valeurs de mesures des sections de mesures sont rassemblées, où
a) les lignes (G1 à G4) des points de mesure de deux sections de mesures différentes ne sont pas parallèles
et/ou
b) l'objet (1) effectue, pour deux sections de mesures différentes, une fois une rotation et une fois pas de rotation,
où le rayonnement de lumière (7) est dévié sur l'objet (1) par le biais d'un ensemble de miroirs (5) et l'ensemble de miroirs (5) comprend plusieurs miroirs (S1 à S4), lesquels sont mis en rotation autour d'un axe de rotation (A2) commun, où les miroirs (S1 à S4) sont fixés à divers angles (γ) par rapport à l'axe de rotation (A2).

2. Procédé selon la revendication 1, **caractérisé en ce que** l'objet est basculé lors d'au moins une section de mesures par rapport à la position d'une section de mesures ultérieure.

3. Procédé selon l'une des revendications 1 et 2, **caractérisé en ce que** l'objet (1) est balayé sur au moins une section de mesures pendant qu'il est en rotation autour d'un axe de rotation (A1), où le rayonnement de lumière (2) et/ou un ensemble de miroirs (5) prévus pour dévier le rayonnement lumineux et l'objet (1) sont déplacés relativement l'un par rapport à l'autre de sorte que les points de mesure s'étendent le long d'une ligne (G1, G2) sur la surface de l'objet (1).

4. Procédé selon l'une des revendications 1 à 3, **caractérisé en ce que** le rayonnement de lumière (7) est déplacé pour au moins une section de mesures dans des lignes (G3, G4) à peu près parallèles au dessus de l'objet (1) n'étant pas en rotation.

5. Procédé selon l'une des revendications 1 à 4, **caractérisé en ce que** le rayonnement de lumière (7) est déplacé, pour au moins une section de mesures en lignes formant des zigzags dont les sommets peuvent se situer en dehors de l'objet (1), au dessus de l'objet (1) n'étant pas en rotation.

6. Procédé selon l'une des revendications 1 à 5, **caractérisé en ce que** la lumière laser (7) est déviée sur l'objet (1) avec des angles (α) différents par rapport à la surface de l'objet (1).

7. Procédé selon l'une des revendications 1 à 6, **caractérisé en ce que**, pour des sections de mesures prédéterminées, au moins un objet de référence (R), en plus de l'objet (1), est balayé conjointement à l'objet (1) une fois une rotation.

8. Procédé selon la revendication 7, **caractérisé en ce qu'**en tant qu'objet de référence (R) une partie prédéterminée d'un dispositif de fixation (4) pour l'objet (1) est balayé conjointement.

9. Procédé selon l'une des revendications 1 à 8, **caractérisé en ce qu'**un signal auxiliaire est généré, lequel contient une information concernant la qualité de surface de l'objet (1) et/ou concernant les propriétés du rayonnement de lumière (7) tombant sur l'objet (1).

10. Procédé selon la revendication 9, **caractérisé en ce que** le signal auxiliaire est généré avec un récepteur de lumière (3, 3') de préférence sensible aux couleurs, en particulier, avec une caméra, de manière particulièrement préférée, une caméra avec un dispositif à transfert de charges CCD.

11. Procédé selon la revendication 9 ou 10, **caractérisé en ce que** des valeurs de mesure sont rejetées en raison de leur intensité de signal et/ou en raison de l'information contenue dans le signal auxiliaire.

12. Procédé selon l'une des revendications 9 à 11, **caractérisé en ce que** l'intensité de la lumière du rayonnement de lumière (7) est variée en raison de l'information contenue dans le signal auxiliaire.

13. Procédé selon l'une des revendications précédentes,
**caractérisé en ce**
**que** l'objet (1) est balayé au moins une fois en étant en rotation et au moins une fois en n'étant pas en rotation, que l'objet est basculé au moins pour une section de mesures par rapport à la position d'une section de mesures ultérieure,
**que** le rayonnement de lumière (7) est dévié sur l'objet (1) par le biais d'un ensemble de miroirs (5) rotatif, et que, lors de chaque section de mesures, une partie du dispositif de fixation (4) est balayée en tant que référence.

14. Ensemble de balayage pour le balayage sans contact d'objets (1) tridimensionnels, lequel comprend un émetteur (2) pour la transmission de rayonnements de lumière (7) focalisés, en particulier, de rayonnements laser, et un récepteur (3) pour la détection de signaux de lumière (8), présente un dispositif de fixation (4) pour l'admission de l'objet (1) et est relié ou peut être relié avec une unité de commande et de calcul (6), où un montage de déviation (4, 5, 23a) pour la déviation du rayonnement de lumière (7) est prévu au dessus de la surface de l'objet (1), au moyen duquel l'objet (1) peut être balayé par au moins deux sections de mesures différentes, où
a) au moyen du montage de déviation (4, 5, 23a), l'objet (1) peut être balayé par au moins deux sections de mesures différentes de telle manière que pour deux sections de mesures différentes, les lignes (G1 à G4) des points de mesure ne sont pas parallèles,
et/ou
b) l'objet est en rotation pendant une section de mesures et n'est pas en rotation pendant l'autre,
où un ensemble de miroirs (5), qui comprend plusieurs miroirs (S1 à S4), lesquels sont disposés en pouvant tourner autour d'un axe de rotation (A2) commun, est prévu pour dévier le rayonnement de lumière (7) sur l'objet (1), où les miroirs (S1 à S4) sont fixés à différents angles (γ) par rapport à l'axe de rotation (A2).

15. Ensemble de balayage selon la revendication 14, **caractérisé en ce que** le dispositif de fixation (4) pour l'objet peut être mis en rotation autour d'un axe de rotation (A1).

16. Ensemble de balayage selon la revendication 14 ou 15, **caractérisé en ce qu'**un montage est prévu pour le basculement de l'objet (1) pour une section de mesures par rapport à la position de l'objet (1) lors d'une autre section de mesures.

17. Ensemble de balayage selon l'une des revendications 14 à 16, **caractérisé en ce que** le rayonnement de lumière (7) incident et le dispositif de fixation (4) peuvent être réglés l'un par rapport à l'autre de telle manière que le rayonnement de lumière (7) peut être balayé sur l'objet (1) total.

18. Ensemble de balayage selon l'une des revendications 14 à 17, **caractérisé en ce que** le montage de déviation (4, 5, 23) est prévu pour le balayage du rayonnement de lumière (7) dans des lignes (G3, G4) à peu près parallèles sur l'objet (1) n'étant pas en rotation.

19. Ensemble de balayage selon l'une des revendications 14 à 18, **caractérisé en ce que** le montage de déviation (4, 5, 23) pour la déviation du rayonnement de lumière (7) est prévu en lignes à peu près en forme de zigzags sur l'objet (1) n'étant pas en rotation, où les points d'inversion de la ligne en zigzag peuvent se situer en dehors de l'objet (1).

20. Ensemble de balayage selon l'une des revendications 14 à 19, **caractérisé en ce que** le montage de déviation (4, 5, 23) est prévu pour le balayage du rayonnement de lumière (7) au dessus de l'objet sous divers angles (α) par rapport à la surface de l'objet.

21. Ensemble de balayage selon l'une des revendications 14 à 20, **caractérisé en ce que** les miroirs (S1 à S4) de l'ensemble de miroirs (5) peuvent être subdivisés en au moins deux groupes identiques, où, à l'intérieur de chaque groupe, tous les miroirs (S1 à S4) sont fixés sous différents angles (γ) par rapport à l'axe de rotation (A1) et les groupes sont disposés autour de l'axe de rotation (A1) en se suivant l'un l'autre.

22. Ensemble de balayage selon l'une des revendications 14 à 21, **caractérisé en ce qu'**un montage est prévu pour la génération d'un signal auxiliaire, dans lequel est contenue une information concernant les propriétés de surface de l'objet (1) et/ou concernant les propriétés du rayonnement de lumière (7) en balayage au dessus de l'objet (1).

23. Ensemble de balayage selon la revendication 22, **caractérisé en ce qu'**un récepteur de lumière de préférence sensible aux couleurs, en particulier une caméra, de manière particulièrement préférée une caméra avec un dispositif à transfert de charges CCD (3'), est prévu pour la détection de l'intensité de la lumières, de la forme géométrique et/ou de l'étendue du rayonnement de lumière sur la surface de l'objet (1) et/ou de la couleur, et/ou de la valeur de la réflectivité de la surface de l'objet dans la région du rayonnement de lumière sur l'objet en tant que critère pour la génération du signal auxiliaire.

24. Ensemble de balayage selon la revendication 22 ou 23, **caractérisé en ce que** le signal auxiliaire et le signal de mesure peuvent être détectés dans le même récepteur.

25. Ensemble de balayage selon l'une des revendications 14 à 24, **caractérisé en ce que** l'ensemble présente au moins un objet de référence (R), lequel est sans équivoque, pour le référencement des points de mesures, où au moins un objet de référence (R) peut être balayé pour des sections de mesures prédéterminées.

26. Ensemble de balayage selon la revendication 25, **caractérisé en ce qu'**au moins un objet de référence (R) se situe sur le dispositif de fixation (4) ou est formé par une partie du dispositif de fixation (4).

27. Ensemble de balayage selon l'une des revendications 25 ou 26, **caractérisé en ce que** l'objet de référence (R) est formé par une surface conique (P) sur le dispositif de fixation (4).

28. Ensemble de balayage selon l'une des revendications 25 à 27, **caractérisé en ce qu'**au moins un objet de référence (R) est formé par au moins un corps (K) partiellement en forme de sphère.
